# EUROPEAN PATENT APPLICATION

(11) **EP 4 663 713 A1**
(43) Date of publication of application: **17.12.2025**
(21) Application number: 24181846.7
(22) Date of filing: 13.06.2024
(51) Int. Cl.: C09J 5/06

(54) **BONDED STRUCTURE COMPRISING AN THERMALLY DEBONDABLE ADHESIVE FILM**

(71) Applicant: Henkel AG & Co. KGaA, 40589 Düsseldorf (DE)
(72) Inventor: Migliore, Nicola, 40227 Düsseldorf (DE); Gutsche, Nadine, 40723 Hilden (DE); Goethel, Frank, 09125 Chemnitz (DE); Franken, Uwe, 41542 Dormagen (DE); Kohlstrung, Rainer, 68723 Plankstadt (DE)

(57) **Abstract**

A bonded structure comprising:
a first substrate (S¹);
a second substrate (S²); and,
a thermally conductive adhesive layer which is interposed between said first and second substrates and which is disposed on said second substrate (S²);
wherein, interposed between said first substrate (S¹) and said thermally conductive adhesive layer, there is further provided:
a dried ink layer, said dried ink layer comprising a matrix of polymeric resin (I^{R}) and electrically conductive particles; and,
a thermally debondable adhesive layer disposed on and in direct contact with said dried ink layer, said thermally debondable adhesive layer comprising a polymeric resin (A^{R}) and thermally expandable thermoplastic microspheres.

## Description

### FIELD OF THE INVENTION

The present disclosure is directed to bonded structure comprising a thermally debondable adhesive. More particularly, the present disclosure is directed to a bonded structure comprising: a thermally conductive adhesive layer; a thermally debondable adhesive layer; and, a dried ink layer disposed on and in direct contact with the thermally debondable adhesive layer, said dried ink layer comprising a polymeric resin and electrically conductive particles.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications, such as the recycling or reuse of components of articles of manufacture. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature - such as disclosed in US Patent No. 4,171,240 (Wong) and US Patent No. 4,729,797 (Linde et al.) - might be effective but can be time consuming and complex to perform: moreover, the aggressive chemicals and / or harsh conditions required can damage the substrates being separated, rendering them unsuitable for subsequent applications.

Noting these problems, certain authors have sought to develop debondable adhesive compositions, wherein the passage of an electrical current through the cured compositions acts to disrupt the bonding at the interface of the adhesive and the substrate. Illustrative references in this regard include: US Patent No. 7,465,492 (Gilbert); US 2007/0269659 (Gilbert); US2020/195025A (Yoder et al.); EP 3 835 383 A1 (Henkel AG & Co. KGaA); EP 3 835 378 A1 (Henkel AG & Co. KGaA); EP 3 835 386 A1 (Henkel AG & Co. KGaA); WO 2016/135341 (Henkel AG & Co. KGaA; and, WO 2022/207300 A1 (Henkel AG & Co. KGaA).

In each of the aforementioned references, the cured adhesives thereof possess *"electrolyte functionality"* in that the adhesive materials permit the conduction of ions, either anions, cations or both: the electrolyte functionality is understood to derive from the ability of the adhesive materials to solvate ions of at least one polarity. Electrolytes provided within the adhesive materials impart sufficient ionic conductivity to said materials to support a faradaic reaction at a bond formed between the material and an electrically conductive surface. The term *"faradaic reaction"* means an electrochemical reaction in which a material is oxidized or reduced and this reaction permits the adhesive material to disbond from the surface.

The present inventors have sought an alternative means of effectively disrupting the bonding of an adhesive material to a substrate, which method utilizes the passage of an electrical current through the adhesive material but which does not require the use of electrolytic compounds. Moreover, the present inventors have sought to develop debondable adhesive materials which may have utility: in the bonding of electronic components to themselves or to supporting frames or encasements for said components; and, in electro-mobility (*e-mobility*) applications, such as within electric powertrain technologies, in-vehicle information technologies, communication technologies and connected infrastructures which enable the electric propulsion of vehicles. It is evidently desirable to provide a means for effectively recycling or re-using previously bonded materials found in electronic and electro-mobility hardware.

### STATEMENT OF THE INVENTION

In accordance with a first aspect of the disclosure there is provided a bonded structure comprising:
a first substrate (S¹);
a second substrate (S²); and,
a thermally conductive adhesive layer which is interposed between said first and second substrates and which is disposed on said second substrate (S²);
wherein, interposed between said first substrate (S¹) and said thermally conductive adhesive layer, there is further provided:
a dried ink layer, said dried ink layer comprising a matrix of polymeric resin (I^{R}) and electrically conductive particles; and,
a thermally debondable adhesive layer disposed on and in direct contact with said dried ink layer, said thermally debondable adhesive layer comprising a polymeric resin (A^{R}) and thermally expandable thermoplastic microspheres.

In an exemplary configuration of the bonded structure, said thermally conductive adhesive layer is disposed on and in direct contact with said second substrate (S²).

In a further exemplary configuration of the bonded structure, said dried ink layer is interposed between said first substrate (S¹) and said thermally debondable adhesive layer with which it is in direct contact. In this configuration, said thermally debondable adhesive layer may be disposed on and in direct contact with said thermally conductive adhesive layer. In this circumstance, at least one spacer may be interposed between said thermally debondable adhesive layer and said thermally conductive adhesive layer.

In an alternative exemplary configuration, said dried ink layer of the bonded structure is interposed between said thermally conductive adhesive layer and said thermally debondable adhesive layer with which it is in direct contact.

It is preferred that the bonded structure is characterized by meeting at least one of the following conditions: i) said thermally conductive adhesive layer has a thickness of from 250 to 2500 µm, preferably from 500 to 2000 µm and more preferably from 1000 to 2000 µm; ii) said thermally debondable adhesive layer has a thickness of from 50 to 300 µm, preferably from 100 to 300 µm and more preferably from 150 to 250 µm; and, iii) said dried ink layer has an average thickness of from 1 to 30 µm, preferably from 1 to 25 µm and more preferably from 5 to 20 µm. For surety, these conditions are not mutually exclusive and the bonded structure may meet one, two or desirably three thereof.

Alternatively or additionally to the thickness characterization above, said dried ink layer may preferably have a sheet resistance of from 5 to 100 ohm/sq. mil as determined in accordance with ASTM D257-14 (2021).

In certain embodiments of the bonded structure said dried ink layer comprises, based on the total weight of the layer: a matrix of polymeric resin (I^{R}); and, from 0.5 to 75 wt.% of electrically conductive particles disposed in said matrix, wherein said electrically conductive particles are characterized by a bulk resistivity of less than 50 microohm-centimeters (µΩ-cm). In an alternative expression of composition, which is not intended to be mutually exclusive of that given above, said dried ink layer may comprise, based on the volume of the layer: a matrix of polymeric resin (I^{R}); and, from 5 to 90 vol.% of electrically conductive particles disposed in said matrix, wherein said electrically conductive particles are characterized by a bulk resistivity of less than 50 microohm-centimeters (µΩ-cm).

Independently of the aforementioned compositional characterization of the dried ink layer, it is preferred that the matrix resin (I^{R}) thereof is chosen from: nitrocellulose; epoxy resins; phenolic resins; polyurethane; polyacrylates; and, mixtures thereof.

The matrix polymeric resin (I^{R}) of the dried ink layer and the polymeric resin (A^{R}) of the thermally debondable adhesive layer are independently selected but it is considered that these resins may be the same or different.

In certain embodiments, said thermally debondable adhesive layer comprises, based on weight of said layer, from 5 to 20 wt.%, preferably from 10 to 20 wt.% and more preferably from 10 to 15 wt.% of said thermally-expandable thermoplastic microspheres. Independently of or additional to this compositional characterization, it is preferred that said thermally expandable thermoplastic microspheres have a core-shell structure, wherein the shell is formed from cross-linked polymer and the core is composed of a blowing agent. The thermally expandable thermoplastic microspheres may, in certain embodiments, expand when exposed to a temperature of from 60 to 200°C, preferably from 80 to 160 °C, more preferably from 80 to 120°C.

In an exemplary bonded structure, said thermally debondable adhesive layer is obtainable by the curing of a two-component (2K) composition comprising:
a first component comprising:
   at least one epoxide compound; and,
   thermally-expandable thermoplastic microspheres; and,
a second component comprising:
   a curing agent comprising at least one compound possessing at least two epoxide reactive groups per molecule; and,
   optionally an accelerator,
wherein the composition is characterized in that the molar ratio of epoxide-reactive groups to epoxide groups is from 0.6:1 to 1.2: 1, preferably from 0.95: 1 to 1.1: 1.

In an alternative exemplary bonded structure, said thermally debondable adhesive layer is obtainable by the curing of a two-component (2K) composition comprising:
a first component comprising:
   at least one polyol chosen from fatty polyols, polyester polyols, polyether polyols, polyether-polyester polyols, polycarbonate polyols, polyacrylate polyols, polydiene polyols and mixtures thereof;
   optionally further active hydrogen compounds; and,
   thermally expandable thermoplastic microspheres;
a second component comprising at least one polyisocyanate,
wherein said composition is characterized in that the molar ratio of NCO groups to active hydrogen atoms is from least 0.9:1 to 1.2:1, preferably from 0.95:1 to 1.1:1.

In accordance with a second aspect of the present disclosure, there is provided a method of debonding the bonded structure as defined herein above and in the appended claims, said method comprising the steps of: i) resistively heating the thermally debondable adhesive layer by passing an electric current through the dried ink layer; and, ii) debonding said adhesive layer and said dried ink layer. In an embodiment, the electric current is passed through the dried ink layer for a duration of from 15 to 3600 seconds, for example from 15 to 1800 seconds. Independently of, or additional to this durational preference, the thermally debondable adhesive layer may be resistively heated to a temperature of from 60 to 200°C, for example from 80 to 160°C or from 80 to 120°C.

The thermal expansion of the microspheres under resistive heating promotes the cohesive failure of the adhesive layer comprising said microspheres. A concomitant effect of this thermal expansion is that the expanded or *"foamed"* adhesive layer provides a thermal insulation effect which can serve to protect the first and / or second substrate(s) of the bonded structure from the elevated temperatures to which the adhesive layer is exposed.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive, and permutations thereof remain within the scope of this disclosure.

### DEFINITIONS

As used herein, the singular forms "a", *"an"* and *"the"* include plural referents unless the context clearly dictates otherwise.

The terms *"comprising", "comprises"* and *"comprised* of" as used herein are synonymous with *"including", "includes", "containing"* or *"contains",* and are inclusive or open-ended and do not necessarily exclude additional, non-recited members, elements or method steps.

As used herein, the term *"consisting of"* excludes any element, ingredient, member or method step not specified. For completeness, the term *"comprising"* encompasses *"consisting of".*

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to* x" specifically includes 0 wt.%: the ingredient defined by said range may be absent from the composition or may be present in the composition in an amount up to x wt.%.

The words *"preferred', "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

Spatially relative terms, such as *"upper", "lower", "top", "back", "above", "below", "left", "right', "on"* or *"upon"* and the like are used herein to describe an element's relationship to another element(s) as illustrated in the figures. Obviously all such spatially relative terms refer to the orientation shown in the figures only for ease of description and are not necessarily limiting given that an apparatus can assume orientations different from those illustrated in the figures when in use.

As used herein, room temperature is 23°C plus or minus 2°C. As used herein, *"ambient conditions"* means the temperature and pressure of the surroundings in which either the composition or a cured product obtained therefrom is located.

The molecular weights referred to in this specification can be measured with gel permeation chromatography (GPC) using polystyrene calibration standards, such as is done according to ASTM 3536.

Viscosities of the compositions described herein are, unless otherwise stipulated, measured using the Anton Paar Viscometer, Model MCR 301 at standard conditions of 25°C and 50% Relative Humidity (RH). The viscometer is calibrated one time a year and checked by services. The calibration is done using standard liquids of known viscosity from 1 to 50,000 cps (Parallel Plate PP20 and at a shear rate of 1s⁻¹ at 23°C). Measurements of the compositions according to the present disclosure are done using the parallel plate PP20 at different shear rates from 1.5 to 100 s⁻¹.

Unless otherwise stated, the term *"particle size"* refers to the largest axis of the particle. In the case of a generally spherical particle, the largest axis is the diameter.

The term *"mean volume particle size" (Dv50),* as used herein, refers to a particle size corresponding to 50% of the volume of the sampled particles being greater than and 50% of the volume of the sampled particles being smaller than the recited Dv50 value. Particle size is determined herein by laser diffraction using Anton Paar Particle Size Analyzer (PSA) 1190.

As used herein, *"aspect ratio"* is defined as the ratio of the particle diameter located perpendicular to the maximum diameter (i.e., the Aspect Diameter) to the maximum diameter. The aspect ratio can be evaluated by image analyses of oriented particles. If the aspect ratio is being determined on a collection of particles, the aspect ratio may be measured on a few representative particles and the results averaged: representative particles should be sampled by ASTM D5680-95a (Reapproved 2001).

As used herein, the term *"thermally conductive"* refers to a material having a thermal conductivity of at least 10 W/m·K as determined according to ASTM E1530 at 23°C and at a relative humidity of 50%. Materials which are thermally conductive are not precluded from being electrically conductive. Thus thermally conductive filler mentioned herein may be both thermally conductive and electrically conductive or, alternatively, may be thermally conductive and electrically insulating.

The definition *"electrically conductive"* characterizes components having a volume electrical conductivity at room temperature of at least 1 x 10⁵ Sm⁻¹. The term *"electrically non-conductive"* as used herein references a material having a volume electrical conductivity of less than 1 Sm⁻¹, typically less than 1 x 10⁻⁵ Sm⁻¹ or less than 1 x 10⁻⁸ Sm⁻¹. The terms *"volume electrical conductivity"* is herein used in accordance with its standard meaning given in ASTM D1711-22 *Standard Terminology Relating to Electrical Insulation.* Electrical conductivity may be measured in accordance with ASTM 257-14 (2021) *Standard Test Methods for DC Resistance or Conductance of Insulating Materials.*

As used herein, the term *"metallic"* may be used to denote pure metal, metal alloys or metal composites. As used herein, the term *"alloy"* refers to a substance composed of two or more metals or of a metal and a non-metal which have been intimately united, usually by being fused together and dissolved in each other when molten. As exemplary metals and metallic alloys, mention may be made of: aluminum; aluminum alloys; bronze; beryllium; beryllium alloys; chromium; chromium alloys; cobalt; cobalt alloys; copper; copper alloys; gold; iron; iron alloys; steels; magnesium; magnesium alloys; nickel; nickel alloys; lead; lead alloys; tin; tin alloys, such as tin-bismuth and tinlead; zinc; zinc alloys; and, superalloys, such as International Nickel 100 (IN-100) or International Nickel 718 (IN-718). Representative steels include: crucible steel; carbon steel; spring steel; alloy steel; maraging steel; and, stainless steel, inclusive of austenitic stainless steel, ferritic stainless steel, duplex stainless steel, and Martensitic stainless steel.

The term *"electronic component"* denotes any component, member or apparatus which fulfils any electric, magnetic and/or electronic functionality. This means that electric, magnetic and/or electromagnetic signals may be applied to and/or generated by the electronic component during regular use. Exemplary electronic components include but are not limited to: batteries; battery cells; (micro)processors; signal processors; displays; capacitors; resistors; transistors; converters; inverters; medical application devices, such as a glucose delivery device or an automatic defibrillator; global positioning system (GPS) receivers; sensors, such as biometric sensors, temperature sensors, moisture sensors, velocity sensors and accelerometers; and, antennas.

The term *"frame"* as used herein encompasses any rigid structure that provides structural support to an object, in particular an electronic component. Whilst a frame may be configured in a variety of different shapes and configurations, the term encompasses rigid structures which may at least partially surround or enclose said objects.

As used herein, the term *"debondable"* means that, after curing of the adhesive composition, the bond strength can be weakened by at least 50% upon application of temperature of from 60 to 200°C for a duration of from 15 to 3600 seconds. Bond strength is measured by Tensile Lap Shear (TLS) test performed at room temperature and based upon EN 1465:2009 (German version) *Adhesives - Determination of tensile lap-shear strength of bonded assemblies.*

As used herein, the term *"one component (1K) composition"* refers to a composition where, during storage of the composition, the components thereof are all admixed together but the properties of the composition, including viscosity, remain sufficiently consistent over the duration of storage to permit successful utility of the composition thereafter.

*"Two-component (2K) compositions"* in the context of the present disclosure are understood to be compositions in which a first component and a second component are stored in separate vessels because of their (high) reactivity. The two components are mixed only before or during application and then react, typically without additional activation, with bond formation and thereby formation of a polymeric network. Herein higher temperatures may be applied in order to accelerate the cross-linking reaction.

As used herein, the term *"monomer"* refers to a substance that can undergo a polymerization reaction to contribute constitutional units to the chemical structure of a polymer. The term *"monofunctional",* as used herein, refers to the possession of one polymerizable moiety. The term *"polyfunctional",* as used herein, refers to the possession of more than one polymerizable moiety.

The term *"accelerator"* is intended herein to encompass any material which is a cure accelerator for the reactive functional compounds of the compositions disclosed herein. The accelerator may be of either the catalytic or reactive type.

The term *"active hydrogen atom"* refers to an hydrogen atom which displays activity according to the Zerewitinofftest as described by Kohlerin J. Am. Chem. Soc., 49, 3181 (1927), which is expressly incorporated herein by reference in its entirety in various non-limiting embodiments. Active hydrogen atoms can be derived from hydroxyl, thiol, primary amine, secondary amine and carboxyl groups.

As used herein, the term *"equivalent (eq.)"* relates, as is usual in chemical notation, to the relative number of reactive groups present in a reaction. The term *"equivalent weight'* as used herein refers to the molecular weight divided by the number of a function concerned. As such, *"epoxy equivalent weight"* (EEW) means the weight of resin, in grams, that contains one equivalent of epoxy.

As used herein, the term *"epoxide compound"* denotes a compound characterized by the presence of at least one cyclic ether group, namely one wherein an ether oxygen atom is attached to two adjacent carbon atoms thereby forming a cyclic structure. The term is intended to encompass monoepoxide compounds, diepoxide compounds, higher polyepoxide compounds having more than two epoxide groups and epoxide terminated prepolymers. The term *"monoepoxide compound"* is meant to denote epoxide compounds having one epoxide group. The term *"polyepoxide compound"* is meant to denote epoxide compounds having at least two epoxide groups. The term *"diepoxide compound"* is meant to denote epoxide compounds having two epoxide groups.

By the term *"polyglycidyl polyether of a polyhydric phenol"* is meant a polyepoxide compound having: terminal epoxide groups; at least one aromatic nucleus, which nucleus may be a fused aromatic nucleus; and, at least two aliphatic groups including terminal epoxy containing aliphatic groups, the aliphatic groups being united to said aromatic nucleus or nuclei through carbon to oxygen to carbon linkages. Such compounds may be produced by the reaction of epichlorohydrin with a polyhydric phenol.

As used herein, *"C₁-Cₙ alkyl"* refers to a monovalent group that contains from 1 to n carbons atoms, that is a radical of an alkane and includes straight-chain and branched organic groups. As such, a *"C₁-C₄ alkyl"* refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present invention, such alkyl groups may be unsubstituted or may be substituted with one or more halogen. Where applicable for a given moiety (R), a tolerance for one or more non-halogen substituents within an alkyl group will be noted in the specification.

The terms *"alkylene group"* refers to a divalent radical derived from an alkyl group, as defined above.

The term *"C₁-Cₙ hydroxyalkyf'* as used herein refers to an HO-(alkyl) group having from 1 to n carbon atoms, where the point of attachment of the substituent is through the oxygen-atom and the alkyl group is as defined above. The term *"C₁-Cₙ aminoalkyl"* as used herein refers to an R¹R²N-(alkyl) group having from 1 to n carbon atoms, where the point of attachment of the substituent is through the nitrogen-atom and the alkyl group is as defined above.

The term *"C₃-C₁₈ cycloalkyl"* as used herein means a saturated cyclic hydrocarbon having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, *"C₂-C₂₀ alkenyl"* group refers to a monovalent aliphatic carbon group that contains 2 to 20 carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, *"E"* and *"Z"* configurations, as appreciated by those of ordinary skill in the art. Examples of said C₂-C₂₀ alkenyl groups include, but are not limited to: -CH=CH₂; -CH=CHCH₃; -CH₂CH=CH₂; -C(=CH₂)(CH₃); -CH=CHCH₂CH₃; - CH₂CH=CHCH₃; -CH₂CH₂CH=CH₂; -CH=C(CH₃)₂; -CH₂C(=CH₂)(CH₃); -C(=CH₂)CH₂CH₃; - C(CH₃)=CHCH₃; -C(CH₃)CH=CH₂; -CH=CHCH₂CH₂CH₃; -CH₂CH=CHCH₂CH₃, - CH₂CH₂CH=CHCH₃; -CH₂CH₂CH₂CH=CH₂; -C(=CH₂)CH₂CH₂CH₃; -C(CH₃)=CHCH₂CH₃; - CH(CH₃)CH=CHCH, -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, *"C₆-C₁₈ aryl"* group used alone or as part of a larger moiety - as in *"aralkyl group" -* refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

The term *"arylene"* as used herein refers to a divalent radical counterpart of an aryl group. Further, as used herein, *"alkylaryl"* refers to alkyl-substituted aryl groups as set forth above. Moreover, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl", "heterocycloalkyl"* and *"heteroaryl"* moieties are alkyl, cycloalkyl and aryl groups as defined hereinabove, respectively, containing N, O, Si or S as part of their structure.

The term *"substituted"* refers to substitution with at least one suitable substituent. For completeness: the substituents may connect to the specified group or moiety at one or more positions; and, multiple degrees of substitution are allowed unless otherwise stated. Further, the terms *"substitution"* or *"substituted with"* include the implicit proviso that such substitution is in accordance with permitted valence of the substituted atom and the substituent, and that the substitution results in a stable compound that does not spontaneously undergo transformation by, for instance, rearrangement, cyclization or elimination.

### BRIEF DESCRIPTION OF THE DRAWINGS

Various other objects, advantages, and features of the disclosure will become apparent to those skilled in the art from the following discussion taken in conjunction with the appended drawings in which:
Fig. 1 depicts a bonded structure in accordance with a first embodiment of the present disclosure and the method of debonding thereof.
Fig. 2 depicts a bonded structure in accordance with a second embodiment of the present disclosure.
Fig. 3 depicts a bonded structure in accordance with a third embodiment of the present invention.

### DETAILED DESCRIPTION OF THE INVENTION

### BONDED STRUCTURE

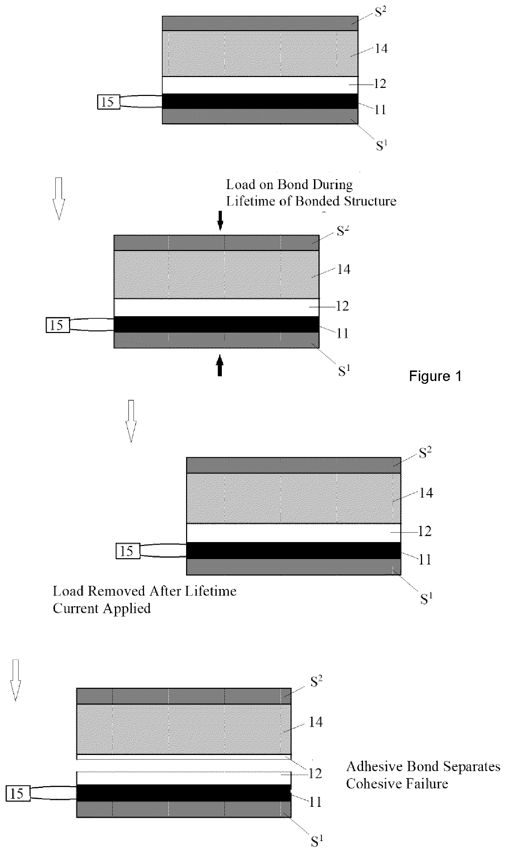

The bonded structure of Figure 1 comprises first (S¹) and second (S²) substrates. A dried ink layer (11) as described herein below is disposed upon the first substrate (S¹) to form the depicted bonded structure. The dried ink layer (11) is shown as being in electrical contact with an electrical power source (15) but it will be recognized that such contact may be absent from the bonded structure during its working lifetime and initiated only when a debonding operation is to be performed. Disposed directly upon the dried ink layer (11) is a thermally debondable adhesive layer (12) which will also be described in detail herein below.

The first substrate (S¹) may be composed of either an electrically conductive or electrically non-conductive material. The second substrate (S²) will conventionally be electrically conductive.

Exemplary conductive materials having utility in or as the substrates (S¹, S²) include, but are not limited to: metallic films; conducting oxide films; or, conductive composite materials. As exemplary conducting oxides there may be mentioned: doped indium oxides, such as indium tin oxide (ITO); doped zinc oxide; antimony tin oxide; cadmium stannate; and, zinc stannate.

Exemplary non-conductive materials having utility in or as the substrates (S¹, S²) include polymeric substrates of which mention may be made of: polyolefins such as polyethylene and polypropylene; polyesters, such as polybutylene terephthalate (PBT) and polyethylene terephthalate (PET); polyamides; polyacrylonitrile; polyvinyl chloride; polyacrylates, such as polymethyl methacrylate; conjugated diene homopolymers, such as polychloroprene, polybutadiene and polyisoprene; copolymers of conjugated dienes; copolymers of conjugated dienes with aromatic vinyl compounds, such as copolymers of butadiene or isoprene with styrene; silicones; and, polyurethanes. It is also possible that an electrically non-conductive substrate may be constituted by a polymer-wrapped metallic material. Further, the use of mineral and lignocellulosic materials in or as an electrically non-conductive substrate is not precluded.

As further shown in Figure 1 appended hereto, the bonded structure is provided in which a layer of thermally conductive adhesive (14) disposed upon the second substrate (S²) and interposed between said substrate (S²) and the thermally debondable adhesive layer (12). The layer of thermally conductive adhesive (14) may, for example, have a thickness of from from 250 to 2500 µm, for instance from 500 to 2000 µm or from 1000 to 2000 µm.

Whilst the thermally conductive adhesive layer (14) is depicted in Figure 1 as being disposed on and in direct contact with the second substrate (S²), it will however be appreciated that one or more intermediate layers may be disposed between the said substrate and said layer (14). An electrocoat (*e-coat*) layer is a first representative example of such an intermediate layer. For metallic second substrates (S²), a conversion coating layer is a further representative example of such an intermediate layer. Herein the term *"conversion"* refers to a treatment of the surface of a substrate which causes the surface material to be chemically converted to a different material. Typically, a metal or alloyed surface substrate is chemically treated to provide a tightly adherent conversion coating, all or part of which consists of a stabilized form - for instance an oxidized form - of the substrate metal. Such chemical conversion coatings can demonstrate high corrosion resistance as well as providing a strong bonding affinity for the subsequent thermally conductive adhesive layer (14).

The thermally conductive adhesive layer (14) should not be thermally or electrochemically debondable: save for these conditions, the thermally conductive adhesive layer (14) is not particularly limited in composition but it should be operable or effective in the bonding of the second substrate (S²). Exemplary matrices for the thermally conductive adhesive layer (14) may be chosen from: epoxy adhesives; acrylic adhesives; polyurethane adhesives; cyanoacrylate adhesives; silicone adhesive; polyimide adhesives; silane modified polymers; butyls; hotmelt adhesives; and, mixtures thereof. Illustrative commercial products having utility in forming the thermally conductive adhesive layer (14) include: Loctite TLB9150APS, a thermally conductive polyurethane adhesive, available from Henkel Corporation.

For completeness, it is noted that the thermally debondable adhesive composition from which layer (12) is derived and the composition from which the thermally conductive layer (14) is derived may be independently cured. Alternatively, the respective compositions may be simultaneously cured where the operable curing conditions for each composition are compatible.

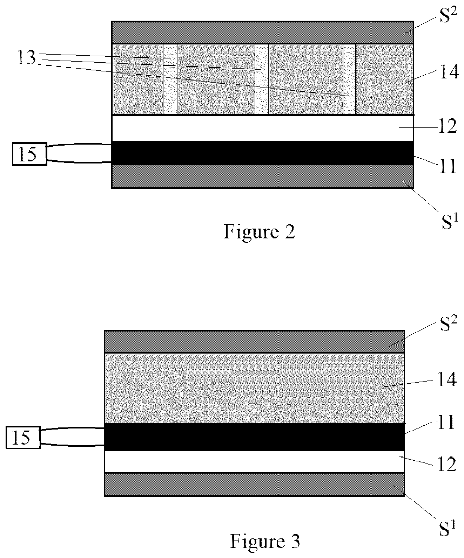

In the embodiment of Figure 2, spacers (13) are interposed within the thermally conductive adhesive layer (14) and contact the thermally debondable adhesive layer (12): these layers (12, 14) otherwise remain in direct contact with one another where said spacers (13) are absent. Any spacer (13) should conventionally be detachable from the adherends without damaging said elements of the bonded structure. For surety, such spacers are optional and may be absent in certain variants of the bonded structure. However, spacers can serve to firmly fix the spatial relationship between the thermally conductive adhesive layer (14) and the thermally debondable adhesive layer (12) and, in doing so, moderate the effects of vibrations and impacts to which a bonded structure might be subjected either *per se* or when included as a component of a larger article of manufacture. This is particularly germane for structures which are to be disposed within portable electronic devices or within vehicles where vibration and jolting can displace adherends.

Where more than one spacer (13) is present, the two spacers may be identical but it is not precluded that individual spacers may possess different geometries and / or be comprised of different materials. Moreover, a given spacer need not be unitary but may comprise a plurality of elements provided this does not compromise the mechanical strength of the spacer or diminish the support role thereof. Still further, the number of spacers and the disposal of the spacers within the thermally conductive adhesive layer (14) may be moderated to optimize that support function. The spacers may be disposed at the extremities of the thermally conductive adhesive layer; alternatively or additionally said spacers may interrupt the thermally conductive adhesive layer (14).

The spacers should preferably be formed from electrically insulating materials which are flame retardant, which possess a suitable hardness and which are suited to meet impact strain requirements, for example by providing shock absorption or flexure for a support system. A Shore A hardness of from 20 to 95, for instance from 30 to 90 might be mentioned in this context. Glass spacers have been utilized in certain circumstances. Also, exemplary polymeric materials having utility as spacers include but are not limited to: polyvinyl chloride; polyalkylenes, such as polyethylene and polypropylene; polyacrylates such as polymethyl methacrylate; conjugated diene homopolymers, such as polychloroprene, polybutadiene and polyisoprene; copolymers of conjugated dienes; copolymers of conjugated dienes with aromatic vinyl compounds, such as copolymers of butadiene or isoprene with styrene; silicones; and, polyurethanes. A preference for injection moldable polymeric materials may be noted.

In the embodiment of Figure 3, the dried ink layer (11) and thermally debondable adhesive layer (12) are juxtaposed as compared to the embodiment of Figure 1. The thermally conductive adhesive layer (14) is interposed between the dried ink layer (11) and the second substrate (S²). Whilst the thermally debondable adhesive (12) is depicted in Figure 3 as being disposed on and in direct contact with the first substrate (S¹), it will however be appreciated that one or more intermediate layers may be disposed between the said substrate and said layer (12). As discussed above, an electrocoat (e-*coat*) layer is a first representative example of such an intermediate layer. For metallic first substrates (S¹), a conversion coating layer is a further representative example of such an intermediate layer.

Each of the configurations of Figures 1 and 3 have been demonstrated to provide effective thermal debonding of the adhesive layer (12) upon resistive heating of the dried ink layer (11) by the passage of an electric current therethrough.

The electrical power source (15) depicted in Figures 1 to 3 may be a battery, an AC-driven source of direct current (DC) or a source of AC current.

An illustrative method of debonding the bonded structure is further depicted in Figure 1 but for surety it is noted that this method is applicable to each of the structural configurations of Figures 1 to 3. The bonded structure is typically subjected to a load during its working lifetime; that load may be removed from the bonded structure after that lifetime or usage. The thermally debondable adhesive layer (12) of the bonded structure is resistively heated by passing an electric current through the dried ink layer (11), the temperature of said adhesive layer (12) being monitored by a suitable method, of which thermal imaging may be mentioned as an example. The current can be applied to the dried ink layer (11) with any suitable waveform. Sinusoidal, rectangular and triangular waveforms might be appropriate in this regard and may be applied from a controlled voltage or a controlled current source.

When the temperature of the thermally debondable adhesive layer (12) reaches the activation temperature of the microspheres disposed therein, these microspheres expand in volume. As a consequence of this expansion cohesive failure may occur within the layer (12) enabling the structure to be separated.

Subject to achieving cohesive failure, there is no particular intention to limit the duration and magnitude of the applied current to the dried ink layer (12). Where the cohesive failure of the layer (12) is to be facilitated by the application of a force - exerted via a weight or a spring, for instance - the current might only need to be applied for the order of seconds. However, typically, the electric current is passed through the dried ink layer (11) for a duration of from 15 to 3600 seconds, for example from 15 to 1800 seconds. Independently of, or additional to this durational preference, the thermally debondable adhesive layer may be resistively heated to a temperature of from 60 to 200°C, for example from 80 to 160°C or from 80 to 120°C.

As discussed above, the illustrated bonded structure may have utility in the bonding of electronic components either to one another or to a frame, which frame may optionally be disposed within an assembly comprising a plurality of electronic components in order to position or constrain one or more of said electronic components. Such an assembly may, for example, be provided with an encasement (*casque*) or other supporting arrangement in order to mitigate impacts or compressive, tensile, torsional, shear or bending stresses imposed thereon. The assembly may contain electrical interconnects which enable a voltage to be applied across electrically conductive surfaces provided on the frame and electronic component(s) thereof. The requisite power source to provide this potential difference may be disposed within the encasement or external to the encasement.

Having regard to automotive applications and, more particularly e-mobility components, the first (S¹) or second (S²) substrate may be provided by, for example: a battery lid; a battery cell, to effect for instance cell-to-cell, cell-to-module or cell-to-body bonding; battery modules; an inverter; or, a converter.

By way of further example, it is envisaged that the bonded structure may serve to debondably fix one or more electronic components to a frame disposed within a phone encasement. The debondable fixing of a battery within such a phone encasement may be specifically mentioned.

### DRIED INK LAYER (11)

The dried ink layer (11) of the bonded structures of Figures 1 to 3 comprises: a matrix of a polymeric resin; and, electrically conductive particles. The disposal of the electrically conductive particles within the polymeric resin matrix should form semi-continuous or continuous conductive pathways which extend through the body of the dried ink layer (11). These pathways should thereby provide a route by which electrons and, in some instances thermal phonons, can travel through the dried ink layer (11).

The dried ink layer (11) itself may, in some embodiments, be provided as a continuous film. In other embodiments however the dried ink layer (11) itself need not be continuous, by which is meant that voids within the two-dimensional area in which the layer is provided may be tolerated or indeed deliberately included in certain circumstances. The term *"void"* herein refers to a volume from which the matrix of polymeric resin is absent. For example, the dried ink layer (11) may be provided as a mesh structure characterized by a regular void pattern. It is preferred herein that voids *in toto* constitute less than 50%, for example less than 30% or less than 20% of the total area of the dried ink layer (11).

Independently of the provided form of the layer (11), it is preferred for the dried ink layer (11) to be electrically conductive in all three dimensions and thus across its width, length and thickness: as is known in the art, electrical resistance measurements may be taken on a surface of the dried ink layer using a probe, such as a 4-point probe, connected to an ohmmeter. Independently of or additional to this dimensional conductivity preference, it is preferred that the dried ink layer (11) has a sheet resistance of from 5 to 100 Ohm/sq/mil, preferably from 7 to 50 Ohm/sq/mil, and more preferably from 10 to 30 Ohm/sq/mil, wherein the sheet resistance is measured according to ASTM D257-14(2021).

The formation of conductive pathways in the dried ink layer should be determinative of the loading of the electrically conductive particulates within that layer. In addition, the loading of said particulates may be selected to attain operable density, and operable rheological and adhesive properties of the dried ink layer (11).

In certain embodiments, the dried ink layer may comprise, based on the total weight of the layer: a matrix of polymeric resin (I^{R}); and, from 0.5 to 75 wt.% of electrically conductive particles disposed in said matrix, wherein said electrically conductive particles are characterized by a bulk resistivity of less than 50 microohm-centimeters (µΩ-cm). For example, the dried ink layer may comprise, based on the weight of the layer: a matrix of polymeric resin; and, from 5 to 75 wt.%, preferably from 15 to 75 wt.% of said electrically conductive particles.

In an alternate expression which is not intended to be mutually exclusive of that given above, the dried ink layer may comprise, based on the volume of the layer: a matrix of polymeric resin (I^{R}); and, from 5 to 90 vol.% of electrically conductive particles disposed in said matrix, wherein said electrically conductive particles are characterized by a bulk resistivity of less than 50 microohm-centimeters (µΩ-cm). For example, the dried ink layer may comprise, based on the volume of the layer: a matrix of polymeric resin; and, from 10 to 75 vol.%, preferably from 30 to 70 vol.% of said electrically conductive particles.

The distribution of the electrically conductive particles within the matrix resin may be homogeneous or non-homogeneous. In certain situation, it may be beneficial for the concentration of particulates to vary across a dimension, in the particular the thickness, of the dried ink layer (11). The variation may permit specific loci of the dried ink layer to exhibit higher relative electrical conductivity and, potentially, thermal conductivity. Such variation should not however compromise the structural integrity of the dried ink layer by, for instance, reducing hardness or tensile strength of the layer.

Broadly, there is no particular intention to limit the shape of the electrically conductive particles in the dried ink layer: particles that are fibrous, acicular, spherical, ellipsoidal, cylindrical, bead-like, cubic or platelet-like may be used alone or in combination. Moreover, it is envisaged that agglomerates of more than one particle type may be used.

Equally, there is no particular intention to limit the size of the particles employed as conductive fillers. And, for surety, it is noted that suitable electrically conductive particles for use in the present disclosure may be a mixture of particles having a small particle size and particles having a larger particle size. However, such electrically conductive particles will conventionally have a mean particle size by volume (Dᵥ50), as measured by laser diffraction, of from 300 nm to 50 µm, for example from 500 nm to 40 µm or from 500 nm to 30 µm.

Additionally or alternatively to the aforementioned mean volume particle size, said electrically conductive particles should typically be characterized by a density of less than 5 g/cm³.

In a further independent characterization of the electrically conductive particles, which may or may not compliment the aforementioned mean particle size and / or density characterizations, it is preferred that the electrically conductive particles have a tap density of from 0.5 to 6.0 g/cm³, preferably from 0.5 to 5.5 g/cm³ and more preferably from 0.5 to 5.0 g/cm³ as determined in accordance to ISO 3953 using a 25 cm³ graduated glass cylinder. The principle of the method specified is tapping a specified amount of powder in a container by means of a tapping apparatus until no further decrease in the volume of the powder takes place. The mass of the powder divided by its volume after the test gives its tap density.

Exemplary non-fibrous, electrically conductive particles which may be present in the dried ink layer, either alone or in combination, include: metallic flakes; metallic powders; milled or ground metallized glass; silicon; silicon dioxide; germanium; selenium; carbon black; graphene; fullerene; graphite; and, carbon nanostructures.

In an embodiment, at least a portion of the electrically conductive particles of the dried ink layer are selected from the group consisting of: silver, silver coated copper; silver coated graphite; silver coated polymers; silver coated aluminium; silver coated glass; and, mixtures thereof. Silver is particularly preferred because of its good electrical performance. Conversely, silver coated particles might gain preference because of their lower cost as compared to silver *per se.* However, in such silver coated or silver plated particles, the silver coating or plating should substantially and preferably wholly coat the underlying particulate material. Alternatively or additional to that requirement, the quantity of silver in the silver coated particle should preferably be from 10 to 70 wt.%, for example from 10 to 65 or 60 wt.% based on the total weight of the electrically conductive particles.

By way of illustration only, suitable commercially available electrically conductive particles based on silver include, but are not limited to: AA3462, AA-5124, AA-192N, C-1284P, C-0083P and P543-14 silver particles, available from Metalor; KP84, KP74 and KP29 silver particles, available from Ames Goldsmidth; CGF-DAB-121B silver coated copper particles, available from Dowa; AgCu0810 or AgCu0305 silver coated copper particles, available from Ames Goldsmidth; CONDUCT-O-FIL^{™} SG15F35 silver coated glass, available from Potters Industries Inc.; the silver coated polymers Spherica^{™} Ag-30-01, Spherica^{™} Ag-10-01 and Spherica^{™} Ag-4-01 available from Conpart AS; silver coated graphite available as P594-5 from Metalor; and, silver coated aluminium available as CONDUCT-O-FIL^{™} SA325S20 from Potters Industries Inc.

The use of conductive carbon blacks as at least a portion of the electrically conductive particles of the dried ink layer is of particular interest. Additionally or alternatively, the use of graphite as at least a portion of the electrically conductive particles of the dried ink layer is of interest. And in certain embodiments, the electrically conductive particles of the dried ink layer comprise a mixture of graphite and carbon black, preferably wherein the ratio by weight of graphite to carbon black is from 1:1 to 5:1 or from 2:1 to 4:1. A particular preference may be noted for the use of a mixture of graphite and carbon black, wherein the ratio by weight of graphite to carbon is 2.5:1 to 3.5: 1, for example 3:1. The combination of graphite and carbon black as the electrically conductive particles is considered to provide good conductivity at the conventional thickness of dried ink layer.

Suitable carbon blacks having utility in the present disclosure should be characterized by at least one of:
i) a specific surface area of from 30 to 1400 m²/g, preferably from 100 to 700 m²/g and more preferably from 150 to 350 m²/g, as determined by low temperature nitrogen absorption in accordance with ASTM D 3037-78;
ii) a pore volume of from 1 to 4 ml/g as determined by mercury porosimetry;
iii) a pore diameter of from 25 to 1000 Angstroms, as determined by mercury porosimetry; and,
iv) an oil absorption number from 70 to 500 ml/100g, preferably from 100 to 300 ml/100g and more preferably from 150 to 200 ml/100g, as determined in accordance with ASTM D2414.

These characterizations are not mutually exclusive and one, two three or four of them may be applicable to a given carbon black having utility in the present disclosure.

Exemplary commercial conductive carbon blacks which may have utility herein include: Black Pearls 2000^{®}, Vulcan^{®} XC-72, Vulcan^{®}3C and Vulcan^{®} C available from Cabot Corporation; Ensaco 250G, available from Imerys and; Ketjenblack^{®}, available from Nouryon.

Particulate graphite having utility in the present disclosure should possess a Dᵥ90 particle size by volume, as measured by laser diffraction / scattering methods, of from 1 µm to 75 µm, preferably from 2 µm to 45 µm, more preferably from 3 µm to 25 µm and even more preferably 3 µm to 10 µm. Additionally or alternatively to the aforementioned particle size, the particulate graphite should possess a specific surface area, as determined by low temperature nitrogen absorption in accordance with ASTM D 3037-78, of from 0.25 to 25 m²/g, preferably from 4 to 22 m²/g and more preferably from 7 to 21 m²/g.

Exemplary commercially available graphites for use in the present disclosure invention include but are not limited to: Timrex SFG6 from TIMCAL Graphite & Carbon; and, Graphite Pure 200-09 available from Asbury.

The use of carbon nanotubes as at least a portion of the electrically conductive particles is also of interest. As used herein, the term *"carbon nanotube"* refers to carbon fullerene, a synthetic graphite, which typically has a molecular weight of greater than 840 g/mole. The term is intended to encompass roped carbon nanotubes, single-walled carbon nanotubes (SWNT), multiple walled carbon nanotubes (MWNT): single walled carbon nanotubes typically have diameters of from 1 to 5 nm whilst multi-walled carbon nanotubes typically have diameters of from 5 to 200 nm. It is further envisaged that carbon nanotubes having utility herein may be opened or chopped, for which US Patent No. 7,641,829 B2 provides an instructive reference. And still further, the present invention does not preclude the use of carbon nanotubes which have been chemically modified through, for example doping with thionyl chloride (SOCl₂) or carbon nanotubes which have been coated with, for example metallic materials which enhance the conductivity of the nanotubes. For completeness, exemplary commercial providers of carbon nanotubes are: Unidym Inc.; and, Carbon Nanotechnologies, Inc.

It is not precluded that the electrically conductive particles of the dried ink layer may comprise or consist of conductive fibers. It is preferred that the conductive fibers are characterized by least one of the following parameters: an aspect ratio of from 5 to 2000, preferably from 20 to 2000; a mean length of from 1 to 20 mm, for instance from 1 to 15 mm; and, a mean diameter of from 1 to 50 µm, preferably from 5 to 25 µm. These characterizations of the conductive fiber are not mutually exclusive: the fibers may meet one, two or three thereof.

Examples of electrically conductive fibers, which may be present in the dried ink layer alone or in combination, include but are not limited to:
a) Fibers of conductive metals such as copper (Cu), iron (Fe), nickel (Ni), cobalt (Co), aluminum (Al), silver (Ag), gold (Au), palladium (Pd), platinum (Pt), ruthenium (Ru), rhodium (Rh), alloys thereof and combinations thereof. Exemplary alloys include nickel alloys and iron alloys and specific mention may be made of the use of stainless steel fibers and monel fibers. Moreover, exemplary combinations of the metals and alloys include but are not limited to: multifilament fibers in which individual filaments comprise different metals or alloys; and, fibers in which a metal or alloy is used to plate or coat a distinct metal or alloy. As regards the latter combination, mention may be made of: silver-plated copper fibers; nickel-clad copper fibers; tin-plated, copper-clad steel fibers; and tin-clad copper fibers.
b) Electrically conductive fibers obtained by modifying electrically insulating polymeric fibers through, for example, incorporating a conductivity-imparting agent into the polymeric fiber or imparting a metallic plating or coating onto a polymeric fiber core. The constituent polymer(s) of the fibers should be characterized by a softening point that is higher - and preferably at least 10°C or at least 20°C higher - than the softening point of the polymer which forms the matrix of the dried ink layer. This enables the matrix to be subjected to a temperature above its softening point, in a molding operation for instance, without melting the metallized polymeric fibers.
c) Carbon fibers, in particular graphite fibers.
d) Fibers obtained by imparting a metallic plating or coating to a non-polymeric, non-metal fiber core, such as a graphite or glass fiber core. Mention in this regard may be made of: nickel plated graphite fibers of which a commercial example is Cycom^{®} fiber available from Solvay; and silver coated glass fibers of which a commercial example includes CONDUCT-O-FIL SF82TF20 available from Potters Industries.

The aforementioned metals and alloys (a)) are candidate conductivity imparting agents for incorporation within or coating of non-metallic fibers: the choice of metal or alloy may be based on both functionality or economy, noting that the cost of precious metals may limit or preclude their use. In those embodiments where a conductive fiber is obtained by applying a metal or alloy coating to a non-metallic core, it is preferred the coating is continuous on the surface of the fiber. Further, the metal or alloy coating should preferably have a thickness of from 0.1 to 100 microns, for example from 0.1 to 50 microns.

The electrically insulating polymeric fibers (b)) may comprise natural polymers, synthetic polymers or combinations thereof. Illustrative synthetic insulating polymeric fibers include: polyolefin fibers, such as polyethylene and polypropylene fibers; polyester fibers; polyacrylate fibers; polyamide fibers, such as nylon and aramid fibers; and, polyimide fibers. Illustrative natural insulating polymeric fibers include polysaccharide fibers, such as fibers of cellulose, starch and fibroin. As regards fibers of type b), mention may be made of coated nylon fibers, coated polyacrylate fibers and coated polyethylene fibers, wherein the coating is selected from silver, gold, nickel, aluminium, iron or steel.

The term *"carbon fiber"* (c) above) herein refers to a fiber of which carbon constitutes at least 95 wt.%, based on the weight of the fiber. As is known in the art, carbon fibers may be classified by the precursors from which are they are derived. Polyacrylonitrile (PAN), pre-oxidized polyacrylonitrile, isotropic-pitch- and mesophase-pitch-based carbon fibers are produced by the wet (solution) spinning of each precursor followed by oxidative stabilization and carbonization (or graphitization) at a temperature up to 1300°C. Vapor-grown carbon fibers are prepared by thermal decomposition of a hydrocarbon vapor, such as methane (CH₄), in which method oxidative stabilization is not needed. There is no intention in the present disclosure to limit the precursor from which the carbon fibers are obtained.

Irrespective of precursor, carbon fibers having utility in the dried ink layer should be characterized by a diameter of from 5 to 25 µm. At diameters above 25 µm, the specific surface area of the fiber may be reduced to the extent that it compromises the compositing of the fibers.

Exemplary commercial carbon fibers having utility herein include: Pyrograf^{®} III carbon fibers, available from Pyrograf Products Inc; and, Thornel^{®} carbon fibers, available from Solvay.

As noted above, the dried ink layer of the present disclosure comprises a matrix of polymeric resin. It is preferred that this polymeric resin has a melting temperature of at least 100°C, preferably at least 125°C.

Exemplary polymeric resins (I^{R}) from which the matrix may be formed - and which may be used alone or in combination - include but are not limited to: nitrocellulose resins; epoxy resins; phenolic resins; polycarbonate; polystyrene; acrylonitrile butadiene styrene copolymers (ABS); styrene acryloniitrile copolymers (SAN); styrene butadiene styrene copolymers; styrene ethylene propylene styrene copolymers; polyvinyl chloride; polyvinylidene fluoride (PVDF); polyolefins, such as polypropylene, polyethylene, and polybutylene; polyamide; polyimide; polyamideimide; polyether imide; polyethylene terephthalate; polybutylene terephthalate; polyethylene naphthalate; polyacrylates, such as polymethyl methacrylate; ethylene butyl acrylate copolymers; polyacrylonitrile; polyetherketone; polyarylketone; polyethersulfone (PES); polyarylsulfone; polysulfone; polyphenylene sulfide; polyurethane; polyurea; polybenzoxazole; polyoxadiazol; polybenzothiazole; polybenzimidazole; polypyridine resin; polytriazole; polypyrrolidone; polydibenzofuran resin; and, polyphosphazene. In an embodiment, the matrix resin of the dried ink layer is chosen from: nitrocellulose; epoxy resins; phenolic resins; polyurethane; polyacrylates; and, mixtures thereof.

The matrix polymeric resin (I^{R}) of the dried ink layer (11) and the polymeric resin (A^{R}) of the thermally debondable adhesive layer (12) are independently selected but it is considered that these resins may be the same or different. In a particular embodiment, for instance, the matrix polymeric resin (I^{R}) of the dried ink layer (11) and the polymeric resin (A^{R}) of the thermally debondable adhesive layer (12) are each epoxy resins. In another embodiment, the matrix polymeric resin (I^{R}) of the dried ink layer (11) and the polymeric resin (A^{R}) of the thermally debondable adhesive layer (12) are each polyurethane.

As illustrated in the appended drawings, the dried ink layer (11) is disposed upon either the first substrate (S1) or the thermally debondable adhesive layer (12). Typically, such disposal will be effected by the application of a solvent-borne composition comprising the matrix resin and the electrically conductive particles onto the non-conductive substrate followed by the evaporative drying of the applied composition. The constituent solvent of the solvent-borne composition will be selected to both dissolve the matrix resin well and to lead to a uniform layer formation upon evaporation.

The amount of solvent is in part determined by the mode of application of the composition, in particular the viscosity tolerance of that mode. Conventionally, the solvent-borne composition should have a viscosity from 0.1 to 30 Pa·s as measured according with ISO 3219 using a rheometer at a constant shear rate of 15-s with a 20 mm plate-plate configuration (0.2 mm gap, 60 sec., 25°C). A particularly suitable viscosity for screen- and roto-screen printing is from 2 to 30 Pa·s. A particularly suitable viscosity for rotogravure or flexographic printing is from 0.5 to 4 Pa·s.

Viscosity aside, it is also considered that significant dilution of the matrix resin may adversely affect the conductivity of the dried ink layer obtained from the solvent-borne composition. Thus conventionally, the solvent content will be from 40 to 90 wt.%, based on the weight of the composition.

The solvent-borne composition may be prepared by mixing the components together. Preferably the mixing is performed in a pebble mill or a tri-roll mill to prevent aggregation of the electrically conductive particles through the action of either grinding with pebbles or passage through the three rolls turning against one other.

Prior to applying the solvent-borne ink compositions, it is often advisable to pre-treat the relevant surfaces to remove foreign matter therefrom: this step can, if applicable, facilitate the subsequent adhesion of the compositions thereto. The ink compositions are then applied to the preferably pre-treated surfaces of the substrate (S¹) or the thermally conductive adhesive layer (12) by conventional application methods such as: bar coating; doctor-blade application; printing methods, including pad printing, stencil printing, screen printing, rotogravure printing, roto screen printing and flexographic printing; and, spraying methods, including but not limited to air-atomized spray, air-assisted spray, airless spray and high-volume low-pressure spray.

It is recommended that the ink compositions be applied to a surface at an average wet film thickness of from 1 to 50 µm, for example from 1 to 30 µm or from 5 to 20 µm. The application of thinner films within this range is more economical and provides for a reduced likelihood of deleterious thick cured regions. However, great control must be exercised in applying thinner coatings so as to avoid the formation of discontinuities in the conductive pathways of the layer (11).

The drying and, if applicable, the curing of the applied solvent-borne ink compositions typically occurs at a temperature of from 20°C to 120°C, preferably from 40°C to 80°C. The temperature that is suitable depends on the carrier solvent of the ink composition, the composition of the substrate (S¹) and, where applicable, the composition of the thermally debondable adhesive layer (12). That said, the temperature required to ensure a desired drying rate can be determined in the individual case by the skilled artisan, using simple preliminary tests if necessary. Of course, drying and, if applicable, curing at lower temperatures within the aforementioned ranges is advantageous as it obviates the requirement to substantially heat or cool the non-conductive substrate (12) and therefore permits the use of more delicate substrates.

For completeness, the term *"dried ink layer"* references the partial or complete removal of the solvent from an ink composition to form a layer therefrom. In particular, drying should comprise at least 90 wt.% or at least 95 wt.% of the total weight of solvent being removed from an ink composition. Drying is associated with coalescence of the polymeric resin(s) of the ink composition. It is not precluded that drying may be associated with curing and interpenetration of the polymeric resins, wherein curing refers to a chemical alteration of the constituent polymeric resins. The degree of coalescence of the polymeric resin(s) can be affected by the pressure and heat which is applied during drying.

It is considered that the dried ink layer may be applied in either a single stage or multi-stage manner to obtain an overall average thickness of the dried ink layer of from 1 to 30 µm, for example from 1 to 25 µm or from 5 to 20 µm. In the multi-stage application, the dried ink layer will be constituted by a plurality of thin sub-layers. It is considered, however, that intra-layer cohesion forces may be more practicable within a dried ink layer provided as a single layer.

### THERMALLY-DEBONDABLE ADHESIVE LAYER (12)

The thermally debondable adhesive layer (12) is obtained by the curing of a curable, liquid-state composition, examples of which will be described herein below. The curable, liquid-state composition comprises: a) thermally-expandable thermoplastic microspheres; b) a polymeric resin (A^{R}); and, optionally c) additive and adjunct materials. As noted above, the polymeric resin (A^{R}) of the thermally debondable adhesive layer (12) and the matrix polymeric (I^{R}) of the dried ink layer (11) are each independently selected and, as such, may be the same or different.

To form a curable, liquid-state composition, the below-described parts are brought together and mixed. As is known in the art, to form one part (1K) curable compositions, the elements of the composition are brought together and homogeneously mixed under conditions which inhibit or prevent the reactive components from reacting: as would be readily comprehended by the skilled artisan, this might include mixing conditions which limit or prevent exposure to irradiation or which limit or prevent the activation of a constituent latent catalyst. As such, it will often be preferred that the curative elements are not mixed by hand but are instead mixed by machine - a static or dynamic mixer, for example - in pre-determined amounts under anhydrous conditions without intentional photo-irradiation.

For the two part (2K) curable, liquid-state compositions, the reactive components are brought together and mixed in such a manner as to induce the hardening thereof. For both one (1K) and two (2K) part compositions, the reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale applications in which volumes of less than 2 liters will generally be used, the preferred packaging for the two-part (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two parts of the composition may advantageously be stored in drums or pails: in this case, the two parts are extruded via hydraulic presses, in particular by way of follower plates, and are supplied via pipelines to a mixing apparatus which can ensure fine and highly homogeneous mixing of the hardener and binder components. In any event, for any package it is important that the binder component be disposed with an airtight and moisture-tight seal, so that both components can be stored for a long time, ideally for 12 months or longer.

Non-limiting examples of two-part dispensing apparatuses and methods that may be suitable for the present invention include those described in U.S. Patent No. 6,129,244 and US Patent No. 8,313,006.

In accordance with the broadest process aspects of the present disclosure, the below described curable, liquid-state compositions are applied to surface(s) (S¹, 11) as applicable and then cured *in situ* to provide the depicted adhesive layer (12). Prior to applying the curable compositions to a substrate (S¹), it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In some embodiments, the adhesion of the applied compositions to the preferably pre-treated substrate (S¹) surface may be facilitated by the application of a primer thereto. Indeed primer compositions may be necessary to ensure efficacious fixture and / or cure times of the compositions on inactive substrates. Whilst the skilled artisan will be able to select an appropriate primer, instructive references for the choice of primer include but are not limited to: US Patent No. 3,855,040; US Patent No. 4,731,146; US Patent No. 4,990,281; US Patent No. 5,811,473; GB 2502554; and, US Patent No. 6,852,193.

The curable, liquid-state compositions are then applied to the preferably pre-treated, optionally primed surfaces by conventional application methods such as: brushing; roll coating; bar coating; doctor-blade application; printing methods; and, spraying methods, including but not limited to air-atomized spray, air-assisted spray, airless spray and high-volume low-pressure spray.

It is recommended that the curable, liquid-state compositions be applied to a surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

The curing of the applied compositions of the disclosure typically occurs at temperatures in the range of from 20°C to 100°C, preferably from 30°C to 90°C, and in particular from 40°C to 80°C. The temperature that is suitable depends on activation temperature of the thermally expandable thermoplastic microspheres included in the composition: such activation needs to be obviated by the selection of a curing temperature below the activation temperature and conventionally mitigating the use of such a temperature by increasing the duration for which it is applied. The presence in the composition of specific compounds, in particular, accelerators may also be determinative of the applicable curing temperature. That said, the temperature required to ensure a desired curing rate can be determined in the individual case by the skilled artisan, using simple preliminary tests if necessary. Of course, curing at lower temperatures within the aforementioned ranges is advantageous as it obviates the requirement to substantially heat or cool the mixture from the usually prevailing ambient temperature. Where applicable, however, the temperature of the mixture formed from the respective elements of the composition may be raised above the mixing temperature and / or the application temperature using conventional means, including microwave induction.

Upon curing, it is preferred that the layer of thermally debondable adhesive layer (12) has a thickness of from from 50 to 300 µm, for instance from 100 to 300 µm or from 150 to 250 µm.

For surety, it is noted that the curable, liquid-state composition from which the thermally debondable adhesive layer (12) is derived and the composition from which thermally conductive adhesive layer (14) is derived may be independently cured. Alternatively, the respective compositions may be simultaneously cured where the operable curing conditions for each composition are compatible.

### a) Thermally Expandable Microspheres

The curable adhesive composition and the cured adhesive layer (12) obtained therefrom comprise thermally-expandable thermoplastic microspheres, which microspheres expand upon exposure to elevated temperature and - in expanding - they enable a debonding effect.

The thermally expandable thermoplastic microspheres typically have a core-shell structure, wherein the shell is formed from a cross-linked co-polymer and the core is composed of a blowing agent. Further, the thermally expandable thermoplastic microspheres should expand when they are exposed to a temperature of from 60 to 200°C, for example from 80 to 160°C or from 80 to 120°C. Whilst nominally that temperature may be applied using any suitable thermal source, a sonication probe or an electromagnetic source, in the aforementioned bonded structure, the passage of electric current through the dried ink layer (11) provides resistive heating of the microspheres disposed in the layer (12).

In certain embodiments, the curable composition may comprise, based on the total weight of the composition, from 5 to 20 wt.%, for example from 10 to 20 wt.% or from 10 to 15 wt.% of a) said thermally-expandable thermoplastic microspheres. When the loading of the thermally-expandable thermoplastic microspheres falls within the above-defined ranges, the microspheres can effectively contribute - upon their actuation and expansion within the cured adhesive - to breaking of the bond line: further the solid content of the curable composition ensures its applicability. Where the amount of thermally-expandable thermoplastic microspheres is below 15 wt.%, bond breakage may be incomplete. Where the amount of thermally-expandable thermoplastic microspheres is above 35 wt.%, the solids content of the composition may be too high without providing any additional technical benefit to debonding.

Suitable cross-linked copolymers for the shell of the microspheres may be prepared by copolymerization of any suitable monomers or co-monomers and more particularly from the copolymerization of a monomer mixture comprising: i) at least one non-ionic mono-ethylenically unsaturated monomer; and, ii) at least one crosslinking monomer having two or more ethylenically unsaturated groups. The cross-linked shell copolymer will typically comprise, based on the weight of the copolymer, from 0.1 to 30 wt.%, of the residues of ii) said at least one crosslinking monomer.

As regards i) said at least one non-ionic mono-ethylenically unsaturated monomer, mention may be made of the use of at least one monomer selected from the group consisting of: styrene; vinyltoluene; ethylene; butadiene; vinyl acetate; vinyl chloride; vinylidene chloride; (meth)acrylonitrile; (meth)acrylamide; C₁-C₂₀ alkyl esters of (meth)acrylic acid such as methyl (meth)acrylate, ethyl (meth)acrylate, butyl (meth)acrylate, 2-ethylhexyl (meth)acrylate, lauryl (meth)acrylate, palmityl (meth)acrylate and stearyl (meth)acrylate; C₂-C₂₀ alkenyl esters of (meth)acrylic acid, such as oleyl (meth)acrylate; benzyl (meth)acrylate; hydroxyl-containing monomers, in particular C₁-C₁₀ hydroxyalkyl (meth)acrylates, such as hydroxyethyl (meth)acrylate and hydroxypropyl (meth)acrylate; glycidyl (meth)acrylate; and, mixtures thereof. In certain embodiments, the crosslinked copolymer comprises residues of methyl methacrylate.

It is noted that the polymer may also be a copolymer prepared by the copolymerization of two or more non-ionic mono-ethylenically unsaturated monomers as listed above. Preferred monomer combinations include: acrylonitrile/methyl (meth)acrylate; styrene/methyl (meth)acrylate; acrylamide/methyl (meth)acrylate; and, acrylonitrile/hydroxyethyl (meth)acrylate. In certain embodiments, the cross-linked polymer comprises residues of acrylonitrile and methyl methacrylate.

Exemplary crosslinking monomers ii) having two or more ethylenically unsaturated groups include diacrylates or dimethacrylates of at least dihydric saturated alcohols. Exemplary crosslinking monomers, which may be used alone or in combination, include but are not limited to: ethylene glycol diacrylate; ethylene glycol dimethacrylate; 1,2-propylene glycol diacrylate; 1,2-propylene glycol dimethacrylate; 1,4-butanediol diacrylate; 1,4-butanediol dimethacrylate; hexanediol diacrylate; hexanediol dimethacrylate; neopentylglycol diacrylate; neopentylglycol dimethacrylate; 3-methylpentanediol diacrylate; and, 3-methylpentanediol dimethacrylate.

A further class of cross-linking monomers ii) comprises diacrylates or dimethacrylates of poly(C₂-C₃)alkylene glycols having weight average molecular weights (Mw) of from 200 to 9000 g/mol. for example from 400 to 2000 g/mol. It is noted that only the homopolymers of ethylene oxide or propylene oxide can be used, but also: block copolymers of ethylene oxide and propylene oxide; and / or, random copolymers of ethylene oxide and propylene oxide, which comprise a random distribution of the ethylene oxide and propylene oxide units. Similarly, the oligomers of ethylene oxide and/or propylene oxide are useful for preparing the crosslinkers, examples being diethylene glycol diacrylate, diethylene glycol dimethacrylate, triethylene glycol diacrylate, triethylene glycol dimethacrylate, tetraethylene glycol diacrylate and/or tetraethylene glycol dimethacrylate.

The core of the thermally-expandable thermoplastic microspheres is preferably composed of physical blowing agent. Suitable compounds for the physical blowing agent, which may be used alone or in combination, include but are not limited to: alkanes, such a propane, n-butane, n-pentane and isopentane; fluoroalkanes, such as trifluoromethane, difluoromethane, 1,1,1,3,3-pentafluorobutane, 1,1,1,3,3-pentafluoropropane, 1,1,1,2-tetrafluoroethane, difluoroethane and 1,1,1,2,3,3,3-heptafluoropropane; perfluoroalkanes, such as carbon tetrafluoride (CF₄), hexafluoroethane (C₂F₆), octafluoropropane (CsFs), octafluorocyclobutane (C₄F₈) and decafluoroisobutane (C₄F₁₀); hydrofluoro-olefins, such as 1,3,3,3-tetrafluoropropene; hydrochlorofluoro olefins, such as 1-chloro-3,3,3-trifluoropropene; cycloalkanes with at least 4 carbon atoms, such as cyclopentane and cyclohexane; dialkyl ethers such as dimethyl ether, methyl ethyl ether and methyl butyl ether; esters, such a methyl formate; ketones, such as acetone; acetals; and tetra(C₁-C₃)alkylsilanes, in particular tetramethylsilane.

In a preferred embodiment, the physical blowing agent comprises at least one hydrocarbon selected from the group consisting of: C₃-C₅ alkanes; and, C₅-C₆ cycloalkanes. In particular, the physical blowing agent may comprise at least one of n-pentane, isopentane and cyclopentane. With the use of the rigid foams as insulation in cooling appliances, cyclopentane is preferred. The hydrocarbons can be used in mixture with water.

The thermally expandable microspheres can be prepared by seed swelling of the crosslinked polymer and encapsulation of the blowing agents.

The thermally expandable thermoplastic microspheres have a mean volume particle size (Dv50), as measured by laser diffraction, of from 5 to 100 µm, such as from 5 to 75 µm, preferably from 5 to 50 µm and more preferably from 10 to 30 µm. The thermally expandable thermoplastic microspheres may, for example, have a mean volume particle size (Dv50), as measured by laser diffraction, of from 12 to 20 µm, or from 13 to 19 µm. For surety, the above-defined particle size ranges relate to the particle before their expansion under thermal actuation.

Suitable commercially available thermally expandable thermoplastic microspheres for use in the present disclosure include but are not limited to: Expancel 031DU40, available from Nouryon.

### c) Additives and Adjunct Ingredients

The curable, liquid-state compositions and the cured adhesive layer (12) obtained therefrom will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are: catalysts; tougheners; plasticizers; stabilizers including UV stabilizers; antioxidants; wax; reactive diluents; dessicants or moisture scavengers; adhesion promoters; fungicides; flame retardants; rheological adjuvants; color pigments or color pastes; solvents; and, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 40 wt.% of the total composition and preferably should not comprise more than 30 wt.% of the composition.

As the present disclosure envisages the utility of both one (1K) and two (2K) part curable compositions, it is noted for completeness that, in general, adjunct materials and additives which contain reactive groups will be blended into the appropriate part of a two part (2K) composition to ensure the storage stability thereof; unreactive materials may be formulated into either or both of the two parts.

The presence of tougheners in the curable, liquid-state composition - in an amount up to 10 wt.%, based on the weight of the composition - can, in certain circumstances, be advantageous to the debonding of the obtained cured adhesive. Without intention to be bound by theory, tougheners can facilitate phase separation within the cured adhesive when actuating thermal conditions are applied.

Exemplary tougheners may be selected from: epoxy-elastomer adducts; and, toughening rubber in the form of core-shell particles dispersed in the epoxy resin matrix.

Elastomer-containing adducts may be used individually or a combination of two or more particular adducts might be used. Moreover, each adduct may independently be selected from solid adducts or liquid adducts at a temperature of 23°C. Typically, useful adducts will be characterized by a ratio by weight of epoxy to elastomer of from 1:5 to 5:1, for example from 1:3 to 3:1. And an instructive reference regarding suitable epoxy / elastomer adducts is US Patent Publication 2004/0204551. Moreover, exemplary commercial epoxy/elastomer adducts for use herein include but are not limited to: HYPDX RK8-4 commercially available from CVC Chemical; and, B-Tough A3 available from Croda Europe Limited.

The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0°C and preferably a glass transition temperature (T_{g}) of -20°C or lower, more preferably -40°C or lower and even more preferably -60°C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have an mean volume particle size (Dv50) of from 10nm to 300nm, for example from 50 nm to 250 nm: said particle size refers to the diameter or largest dimension of a particle in a distribution of particles and is measured via dynamic light scattering. For completeness, the present application does not preclude the presence of two or more types of core shell rubber (CSR) particles with different particle size distributions in the composition to provide a balance of key properties of the resultant cured product, including shear strength, peel strength and resin fracture toughness.

The core-shell rubber may be selected from commercially available products, examples of which include: Paraloid EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 551, MX553; and, METABLEN SX-006 available from Mitsubishi Rayon.

The addition of certain additives may promote the adhesion of the curable, liquid-state composition - and the cured adhesive obtained therefrom - to particular substrates. In this regard, the curable, liquid-state composition may comprise from 0 to 5 wt.%, for example from 0.5 to 5 wt.% based on the weight of the composition, of at least one adhesion promoter.

In certain embodiments, the adhesion promoter may be selected from the group consisting of: morin(2-(2,4-dihydroxy phenyl)-3,5,7-trihydroxy-4H-1-cumarone-4-ketone); 3,7-dihydroxy-2-naphthoic acid (3,7-dihydroxy naphthlene-2-carboxylic acid); pyrogallol carboxylic acid (2,3,4-trihydroxybenzoic acid); 3,4-dihydroxy-benzene guanidine-acetic acid; gallic acid (3,4,5-trihydroxybenzoic acid); para-aminosalicylic acid (4-amino-2-hydroxybenzoic acid, PAS); flutter acid (4,4'-methylene-bis(3-hydroxy-2-naphthoic acid)); citric acid (2-hydroxypropane-1,2,3-tricarboxylic acid); and, mixtures thereof. Of these compounds a preference for the use - alone or in combination - of citric acid, gallic acid and, in particular, para-aminosalicylic acid (PAS) may be mentioned.

It is noted that compounds having metal chelating properties may also be used in the compositions of the present disclosure to help enhance the adhesion of the cured composition to a substrate surface. Also suitable for use as adhesion promoters are the acetoacetate-functionalized modifying resins sold by King Industries under the trade name K-FLEX XM-B301.

A *"plasticizer"* for the purposes of this disclosure is a substance that decreases the viscosity of the curable, liquid-state composition and thus facilitates its processability. Herein the plasticizer may constitute up to 20 wt.%, for example from 1 to 10 wt.% or from 1 to 7 wt.%, based on the total weight of the composition, and is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof.

Exemplary commercially available plasticiser for use in the present disclosure include but are not limited to: Lupranol 1000/1, available from BASF; Caradol ED 56-300 available from Shell; Arcol PPG 2000 available from Covestro; Voranol 2000 L available from DOW; and, Jeffol PPG 2000 available from Huntsman.

*"Stabilizers"* for purposes of this disclosure are to be understood as antioxidants, UV stabilizers or hydrolysis stabilizers. Herein stabilizers may constitute *in toto* from 0 to 10 wt.%, for example from 0 to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

The curable, liquid-state composition of the present disclosure may, in certain embodiments, comprise a thermally conductive filler. For example, the composition may comprise from 0 to 20 wt.%, for example from 0 to 15 wt.% or from 0 to 10 wt.% of thermally conductive filler, based on the weight of the composition.

Where the curable composition is a two-component (2K) composition, the thermally conductive filler may be included in the first component, the second component or both of the first and second components of the composition.

Broadly, there is no particular intention to limit the shape of the particles employed as thermally conductive fillers: particles that are acicular, spherical, ellipsoidal, cylindrical, bead-like, cubic or platelet-like may be used alone or in combination. Moreover, it is envisaged that agglomerates of particles, including agglomerates of more than one particle type, may be used. It is preferred however that the particles of thermally conductive filler have an aspect ratio of less than 5, such as less than 2, less than 1.5 or less than 1.3. The use of ellipsoidal or spherical particles, for instance, can serve to obviate the composition having an undesirably high viscosity as the conventional loading of the filler.

Equally, there is no particular intention to limit the size of the particles employed as thermally conductive fillers. However, the thermally conductive filler should in toto possess an mean volume particle size (Dv50), as measured by laser diffraction, of from 0.1 to 500 µm, for example from 0.5 to 200 µm or from 0.5 to 100 µm. Independently of or additional to this overall mean particle size, the thermally conductive filler may have a polymodal particle size distribution which may be the consequence of combining two or more particulates (P1, P2) which are characterized by different mean volume particle sizes (Dv50^{P1}, Dv50^{P2}).

Exemplary thermally conductive fillers include metallic filler, inorganic filler, carbon-based filler, thermally conductive polymer particle filler and combinations thereof.

Metallic fillers include metallic particles and particles of metals which possess non-metallic layers on the surfaces thereof the particles. Such non-metallic layers include, but are not limited to metal nitride layers or metal oxide layers. Suitable metallic fillers are exemplified by particles of metals selected from aluminum, copper, gold, nickel, silver and combinations thereof. Suitable metallic fillers are further exemplified by particles of the metals listed above having layers on their surfaces chosen from aluminum nitride, aluminum oxide, copper oxide, nickel oxide, silver oxide and combinations thereof. In an illustrative example, the metallic filler may comprise aluminum particles which having aluminum oxide layers on their surfaces.

Illustrative inorganic fillers, which may be used alone or in combination, include: metal oxides, such as aluminum oxide, beryllium oxide, magnesium oxide and zinc oxide; nitrides, such as aluminum nitride and boron nitride; and, carbides, such as silicon carbide and tungsten carbide. Further examples include aluminum trihydrate, silicone dioxide, barium titanate and magnesium hydroxide.

Carbon-based fillers can include carbon nanotubes, carbon nanostuctures, non-graphitic carbon fibers, diamond, and graphite. The term graphite is intended to encompass herein natural and synthetic crystalline graphites, expanded graphites, graphitic carbons and graphitic carbon fibers. The use of expanded graphite may be mentioned in particular.

The term *"carbon nanotube"* as used herein refers to carbon fullerene, a synthetic graphite, which typically has a molecular weight of greater than 840 g/mole. The term is intended to encompass roped carbon nanotubes, single-walled carbon nanotubes (SWCNT) and multiple walled carbon nanotubes (MWCNT). Single walled carbon nanotubes - having a wall consisting of only one graphene layer - typically have diameters of from 1 to 5 nm; multi-walled carbon nanotubes typically have diameters of from 5 to 200 nm. It is further envisaged that carbon nanotubes having utility herein may be opened or chopped, for which US Patent No. 7,641,829 B2 provides an instructive reference. And still further, the present disclosure does not preclude the use of carbon nanotubes which have been chemically modified through, for example, doping with thionyl chloride (SOCl2).

The term *"carbon nanostructure"* or "CNS" refers herein to a plurality of carbon nanotubes (CNTs) that can exist as a polymeric structure through, in particular, sharing common walls with one another and / or through being one or more of: interdigitated; branched; entangled; or, crosslinked. Thus, carbon nanostructures can be considered to have carbon nanotubes as a base monomer unit of their polymeric structure. In many cases, the constituent carbon nanotubes will be multiple walled carbon nanotubes (MWCNT).

Examples of thermally conductive polymer fillers include oriented polyethylene fibers and nanocellulose. Other examples of polymers that could be used to make thermally conductive fillers include polythiophene and liquid crystalline polymers based on polyesters or epoxies.

In certain embodiments, the composition comprises electrically insulating, thermally conductive fillers. In other embodiments, the thermally conductive filler of the composition comprises at least one particulate chosen from aluminum oxide, aluminum nitride, boron nitride, magnesium oxide, zinc oxide, expanded graphite and mixtures thereof.

The above described thermally conductive fillers may, in certain embodiments, have been pretreated with a surface treatment agent prior to inclusion in the composition. Conventionally, the surface treatment agent will comprise from 0.1 to 5 wt.%, for example from 0.1 to 2 wt.% based on the total weight of the thermally conductive filler.

Exemplary surface treatment agents, which may be used alone or in combination, include but are not limited to: fatty acids; silanes, in particular alkoxysilanes such as hexyltrimethoxysilane, octyltriethoxysilane, decyltrimethoxysilane, dodecyltrimethoxysilane, tetradecyltrimethoxysilane, phenyltrimethoxysilane, phenylethyltrimethoxysilane, octadecyltrimethoxysilane and, octadecyltriethoxysilane; alkoxy-functionalized oligosiloxane; cyclic polyorganosiloxane; hydroxyl-functionalized oligosiloxanes; organochlorosilanes, such as methyltrichlorosilane, dimethyldichlorosilane and trimethyl monochlorosilane; organosilazanes such as hexamethyldisilazane and hexamethylcyclotrisilazane; and organoalkoxysilanes such as methyltrimethoxysilane, vinyltrimethoxysilane, vinyltriethoxysilane, 3-glycidoxypropyltrimethoxysilane and 3-methacryloxypropyltrimethoxysilane.

Whilst the composition of the present disclosure may, in certain embodiments, comprise a thermally conductive filler, this does not preclude the presence in the composition of further fillers. Such fillers may serve as *inter alia* reinforcing fillers, extending fillers, magnetic fillers, electrically conductive fillers or as absorbers of electromagnetic radiation. Whilst such further fillers should not typically comprise more than 10 wt.% of the weight of the composition, the desired viscosity and elected method of application of the curable composition will typically be determinative of the total amount of further filler which may be added. For example, compositions which are intended to be extrudable from a suitable dispensing apparatus, such as a tube, should possess a viscosity of from 1000 to 150,000, preferably from 10,000 to 100,000 mPas.

Exemplary further inorganic fillers include for example, chalk, lime powder, precipitated and/or pyrogenic silicic acid, zeolites, bentonites, magnesium carbonate, diatomite, clay, talc, titanium oxide, iron oxide, sand, quartz, flint, mica, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, Kevlar fibers, or polyethylene fibers can also be added.

The pyrogenic and/or precipitated silica may advantageously have a BET surface area from 10 to 90 m²/g: when they are used, such silicas do not cause any additional increase in the viscosity of the composition according to the present disclosure, but do contribute to strengthening the cured composition. It is likewise conceivable to use pyrogenic and/or precipitated silicic acids having a higher BET surface area, advantageously from 100 to 250 m²/g, in particular from 110 to 170 m²/g, as a filler: because of the greater BET surface area, the effect of strengthening the cured composition is achieved with a smaller proportion by weight of silica.

Fillers which impart thixotropy to the composition may be preferred for many applications: such fillers are also described as rheological adjuvants, e.g. hydrogenated castor oil, fatty acid amides, or swellable plastics such as PVC.

A need also occasionally exists to lower the viscosity of the composition according to the present disclosure for specific applications, by using non-reactive diluent(s). For instance, but for illustration only, the composition may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said non-reactive diluents constitute less than 10 wt.%, in particular less than 5 wt.% or less than 2 wt.%, based on the total weight of the composition.

### b) Polymeric Resin (A^{R})

As described above, the debondable adhesive layer (12) of the bonded structure comprises b) a polymeric resin (A^{R}). That resin provides the continuous phase of the cured adhesive in which the thermally expandable microspheres are dispersed.

Illustrative polymeric resins include: thermoplastic synthetic resins, such as polyolefin resins, EVA (ethylene-vinyl acetate copolymer) resins, vinyl acetate resins, vinyl acetate copolymers, ionomer resins, acrylic resins, acrylic copolymers, cyanoacrylate resins, vinyl chloride resins, polyvinyl acetal resins, polyurethane resins, polyester resins and polyamide resins; thermosetting synthetic resins such as acrylic resins, acrylic-epoxy hybrid resins, maleimide resins, urea resins, melamine resins, phenolic resins, epoxy resins, epoxy-phenolic hybrid resins, polyurethane resins, urethane prepolymers, polyurethane-epoxy hybrid resins, polyester resins and diallyl phthalate resins; and, moisture-curing resins such as urethane prepolymers and modified silicone resins.

For completeness, urethane prepolymers are reaction products obtained by reacting a polyol with a polyisocyanate compound such that there is a stoichiometric excess of isocyanate (NCO) groups with respect to hydroxyl (OH) groups). Further, exemplary modified silicone resins include polymers having (C₂-C₆)alkylene oxide monomer units on the main chain and having at least one hydrolyzable silicon-containing group per molecule.

It is preferred that the cured debondable adhesives of the present disclosure comprise a polymeric resin (A^{R}) chosen from: epoxy resins; polyurethane resins; acrylic-epoxy hybrid epoxy resins; polyurethane-epoxy hybrid resins; and, mixtures thereof. Such polymeric resins (A^{R}) are a necessary component of the curable, liquid state compositions from which the debondable adhesive layer (12) is obtained. Further details of curable, liquid state compositions containing said polymer resins (A^{R}) will be provided herein below.

### Epoxy Based Matrix Resin Systems

The polymeric resin (A^{R}) of the curable, liquid state composition may be based on epoxide compounds.

As such, there may be provided a curable one-part (1K) composition comprising:
at least one epoxide compound;
thermally-expandable thermoplastic microspheres as described herein above; and,
a curing agent comprising one or more compounds which have at least one epoxide reactive group;
wherein the composition is characterized by a molar ratio of epoxide-reactive groups to epoxide groups of from 0.6:1 to 1.2: 1, for example from 0.95: 1 to 1.1: 1.

In the alternative, there may be provided a curable two-part (2K) composition comprising:
a first part comprising:
   at least one epoxide compound; and
   thermally-expandable thermoplastic microspheres as described herein above; and,
a second part comprising:
   a curing agent comprising at least one compound possessing at least two epoxide reactive groups per molecule; and,
   optionally an accelerator,
wherein the composition is characterized by a molar ratio of epoxide-reactive groups to epoxide groups from 0.6:1 to 1.2: 1, for example from 0.95: 1 to 1.1: 1.

### Epoxide Compounds

The one-component (1K) composition or the first component of the two-component (2K) composition comprises at least one epoxide compound. Typically, the composition comprises from 5 to 30 wt.% said at least one epoxide compound, based on the total weight of the composition. For example, the composition may contain from 5 to 25 wt.% or from 5 to 20 wt.% of said at least one epoxide compound, based on the total weight of said composition.

The epoxide compounds may include monoepoxide compounds, polyepoxide compounds and combinations thereof. Thus, the epoxide compounds may be pure compounds but equally may be mixtures of epoxide functional compounds, including mixtures of compounds having different numbers of epoxide groups per molecule. An epoxide compound may be saturated or unsaturated, aliphatic, cycloaliphatic, aromatic or heterocyclic and may be substituted. Further, the epoxide compound may also be monomeric or polymeric.

Without intention to limit the present disclosure, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; monoepoxy-substituted alkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

The following glycidyl ethers might be mentioned as exemplary monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (Al) herein below: 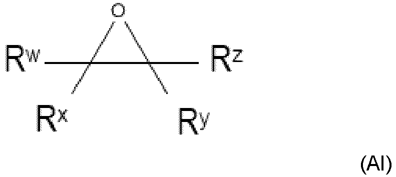 wherein: R^{w}, R^{x}, R^{y} and R^{z} may be the same or different and are independently selected from hydrogen, a halogen atom, a C₁-C₈ alkyl group, a C₃ to C₁₀ cycloalkyl group, a C₂-C₁₂ alkenyl group, a C₆-C₁₈ aryl group or a C₇-C₁₈ aralkyl group, with the proviso that at least one of R^{y} and R^{z} is not hydrogen.

It is preferred that R^{w}, R^{x} and R^{y} are hydrogen and R^{z} is either a phenyl group or a C₁-C₈ alkyl group and, more preferably, a C₁-C₄ alkyl group.

Having regard to this embodiment, exemplary monoepoxides include: ethylene oxide; 1,2-propylene oxide *(propylene oxide);* 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

Again, without intention to limit the present compositions, suitable polyepoxide compounds may be liquid, solid or in solution in solvent. It is preferred that the or each polyepoxide compound included in constituent a) has an epoxide equivalent weight of from 100 to 700 g/eq, for example from 120 to 320 g/eq. Typically diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be included in the curable composition, mention may be made of: polyglycidyl ethers of polyhydric alcohols; polyglycidyl ethers of polyhydric phenols; polyglycidyl esters of polycarboxylic acids; and, epoxidized polyethylenically unsaturated hydrocarbons.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of C₂-C₃₀ aliphatic diols, such as 1,2-ethanediol, 1,4-butanediol, 1,6-hexanediol, 1,8-octanediol and 1,12-dodecanediol; diglycidyl ethers of C₅-C₃₀ cycloaliphatic diols, such as cyclopentane diol and cyclohexane diol; diglycidyl ethers of C₆-C₃₀ dihydric phenolic compounds, such as pyrocatechol, resorcinol, hydroquinone, 4,4'-(propane-2,2-diyl)diphenol (*Bisphenol-A*), 4,4'-dihydroxydiphenyl methane (*Bisphenol-F*)*,* 4,4'-dihydroxy-3,3'-dimethyldiphenyl methane, 4,4'-dihydroxydiphenyl methyl methane, 4,4'-dihydroxydiphenyl cyclohexane, 4,4'-dihydroxy-3,3'-dimethyldiphenyl propane and 4,4'-dihydroxydiphenyl sulfone (*Bisphenol-S*); polyalkyleneglycol based diglycidyl ethers, in particular polypropyleneglycol diglycidyl ethers; and, polycarbonatediol based glycidyl ethers.

Further illustrative polyepoxide compounds which may be used in or as constituent a) include but are not limited to: glycerol polyglycidyl ether; trimethylolpropane polyglycidyl ether; pentaerythritol polyglycidyl ether; diglycerol polyglycidyl ether; polyglycerol polyglycidyl ether; sorbitol polyglycidyl ether; triglycidyl ether of 4,4',4"-trihydroxyphenyl methane; triglycidyl ether of tris(4-hydroxyphyenyl)methane; polyglycidyl ethers of methylenebis(naphthalene)-diol, -triol, or -tetrol; 2,7,2',7'-tetraglycidyloxynaphthalene methane; and 1,1,2,2-tetrakis(4-glycidyloxyphenyl)ethane.

Glycidyl esters of polycarboxylic acids having utility in the present curable compositions may be derived from polycarboxylic acids which contain at least two carboxylic acid groups and no other groups reactive with epoxide groups. The polycarboxylic acids can be aliphatic, cycloaliphatic, aromatic and heterocyclic. The preferred polycarboxylic acids are those which contain not more than 18 carbon atoms per carboxylic acid group of which suitable examples include but are not limited to: oxalic acid; sebacic acid; adipic acid; succinic acid; pimelic acid; suberic acid; glutaric acid; dimer and trimer acids of unsaturated fatty acids, such as dimer and trimer acids of linseed fatty acids; phthalic acid; isophthalic acid; terephthalic acid; trimellitic acid; trimesic acid; phenylene-diacetic acid; chlorendic acid; hexahydrophthalic acid, in particular hexahydroorthophthalic acid (1,2-cyclohexanedicarboxylic acid); diphenic acid; naphthalic acid; polyacid terminated esters of di-basic acids and aliphatic polyols; polymers and co-polymers of (meth)acrylic acid; and, crotonic acid.

Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

And examples of highly preferred polyepoxide compounds include: bisphenol-A epoxy resins, such as DER^{™} 331, DER^{™} 332, DER^{™} 383, JER^{™} 828 and Epotec YD 128; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; sorbitol glycidyl ether, such as ERISYS^{™} GE-60; and, bis(2,3-epoxypropyl)cyclohexane-1,2-dicarboxylate, available as Lapox Arch-11.

In an exemplary embodiment, the epoxide constituent of the composition comprises:
ai) at least one diglycidyl ether chosen from diglycidyl of C₅-C₃₀ cycloaliphatic diols, diglycidyl ethers of C₆-C₃₀ dihydric phenolic compounds and mixtures thereof; and,
aii) at least one liquid epoxide compound which acts as a diluent for said part a1) and which has from 1 to 6 epoxide groups per molecule.

Preferably part a1) may comprise a diglycidyl ether of a dihydric phenolic compound chosen from 4,4'-(propane-2,2-diyl)diphenol (*Bisphenol-A*), 4,4'-dihydroxydiphenyl methane (*Bisphenol-F*)*, 4,4'-*dihydroxy-3,3'-dimethyldiphenyl methane, 4,4'-dihydroxydiphenyl methyl methane, 4,4'-dihydroxydiphenyl cyclohexane, 4,4'-dihydroxy-3,3'-dimethyldiphenyl propane and 4,4'-dihydroxydiphenyl sulfone (*Bisphenol-S*)*.*

Preferably part a2) comprises at least one epoxide compound chosen from: glycidyl ether; cresyl glycidyl ether; polyethylene glycol glycidyl ether; polypropylene glycol glycidyl ether; butyl glycidyl ether; 2,2,4-trimethylpentyl glycidyl ether; phenyl glycidyl ether; cyclohexanedimethanol glycidyl ether; p-t-butyl phenyl glycidyl ether; neopentyl glycol di-glycidyl ether; cyclohexanedimethanol glycidyl ether; 1,4-butanediol diglycidyl ether; cardolite; C₁₂-C₁₄ alcohol glycidyl ether; and, mixtures thereof.

In an embodiment, part a2) comprises or consists of 1,4-butanediol diglycidyl ether: this ether is preferred because of its low viscosity, difunctionality and high glass transition temperature (Tg) and it improves chemical resistance.

Suitable commercially available reactive diluents for use in the present disclosure include but are not limited to: EPODIL 750 available from Evonik; RP 46 available from BASF; Heloxy Modifier 67 available from Westlake; and, Erisys GE 21 available from Huntsman.

The ratio by weight of part a2) to part a1) should typically be from 1:10 to 1:20, for example from 1:10 to 1:15 or from 1:10 to 1:12. These reactive diluent quantities are preferred to provide a balance between over-softness and over-stiffness of the matrix which would both be deleterious to debonding properties of the cured adhesive.

The above aside, the epoxide constituent can in certain embodiments comprise epoxide-functional alkoxy silanes having the formula (ES):

E-(CH₂)ₙ-Si(R^{s})ₘ(OR^{t})₃₋ₘ (ES)

wherein:
E is 2,3-epoxypropoxy, epoxycyclohexyl or epoxycyclopentyl;
n is from 1-10;
m is 0, 1 or 2;
each R^{s} is independently C₁-C₃ alkyl; and,
each R^{t} is independently C₁-C₃ alkyl.

In preferred embodiments: E is 2,3-epoxypropoxy; n is from 1 to 8; m is 0 or 1; R^{s}, when present, is methyl or ethyl; and, each R^{t} is independently methyl or ethyl.

Exemplary silanes, which may be used alone or in combination, include but are not limited to: 2-(3,4-epoxycyclohexyl)ethyltrimethoxysilane; 3-glycidoxypropyl methyldimethoxysilane; γ-glycidoxy propyl trimethoxy silane; γ-glycidoxy ethyl trimethoxy silane; γ-glycidoxymethyl trimethoxy silane; γ-glycidoxy methyl triethoxy silane; 3-glycidoxypropyl methyldiethoxysilane; γ-glycidoxy ethyl triethoxy silane; γ-glycidoxy propyl triethoxy silane; and, 8-glycidooxyoctyl trimethoxysilane. The use of γ-glycidoxy propyl trimethoxy silane may be mentioned in particular.

When present, the epoxide functional alkoxysilanes should constitute less than 20 wt.%, preferably less than 15 wt.% or less than 10 wt.%, based on the total weight of the epoxide compounds in the composition.

The present disclosure does not preclude the curable compositions from further comprising one or more cyclic monomers selected from the group consisting of: oxetanes; cyclic carbonates; cyclic anhydrides; and, lactones. However, such cyclic co-monomers should constitute less than 10 wt.%, preferably less than 8 wt.% or less than 5 wt.%, based on the total weight of the epoxide functional compounds in the composition.

### Curing Agent

The present disclosure provides for the presence in the composition of a curing agent comprising one of more compounds which have at least one epoxide reactive group. The amount of curing agent present in the composition should broadly be sufficient to effect the complete cure of the epoxide compound(s). More particularly, the amount of curing agent present in the composition should be such that composition is characterized by a molar ratio of epoxide-reactive groups to epoxide groups from 0.65:1 to 1.5: 1, for example from 0.75: 1 to 1.1: 1. Notably, the molar ratio of epoxide-reactive groups to epoxide groups of 1:1 is included within these stated ranges and itself represents a highly preferred molar ratio. For surety: the term epoxide reactive groups includes latent reactive groups which are therefore include in the molar ratio term.

In an supplementary expression of the composition's constituency, it is preferred that the composition comprises from 0.01 to 25 wt.% of said curing agent for said epoxide compound(s), based on the weight of the composition. Preferably said composition comprises from 5 to 25 wt.%, for example from 5 to 20 wt.% of said curing agent.

Reactive curing agents may, in particular, include one or more of: at least one polyamine having at least two amine hydrogens reactive toward epoxide groups; at least one mercapto compound having at least two mercapto groups reactive toward epoxide groups; and, at least one Mannich base.

The at least one polyamine having at least two amine hydrogens reactive toward epoxide groups should, in particular, contain primary and / or secondary amine groups and have an equivalent weight per primary or secondary amine group of not more than 150 g/eq., more preferably not more than 125 g/eq.

Suitable polyamines, which may be used alone or in combination, include but are not limited to the following:
i) Aliphatic, cycloaliphatic or arylaliphatic primary diamines of which the following examples may be mentioned: 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo[5.2.1.0^{2,6}]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro[5.5]undecane; and, 1,3-bis(aminomethyl)benzene (MXDA).
ii) Tertiary amine group-containing polyamines with two or three primary aliphatic amine groups of which the following specific examples may be mentioned: N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)cyclohexylamine; N,N-bis(3-aminopropyl)-2-ethyl-hexylamine; tris(2-aminoethyl)amine; tris(2-aminopropyl)amine; tris(3-aminopropyl)amine; and, the products from the double cyanoethylation and subsequent reduction of fatty amines derived from natural fatty acids, such as N,N-bis(3-aminopropyl)dodecylamine and N,N-bis(3-aminopropyl)tallow alkylamine, commercially available as Triameen^{®} Y12D and Triameen^{®} YT (from Akzo Nobel).
iii) Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine@ RFD-270 (from Huntsman); polyoxyalkylenedi- or-triamines obtainable as products from the amination of polyoxyalkylenedi- and -triols and which are commercially available under the name of Jeffamine@ (from Huntsman), under the name of polyetheramine (from BASF) or under the name of PC Amines^{®} (from Nitroil). A particular preference may be noted for the use of Jeffamine^{®} D-230, Jeffamine^{®} D-400, Jeffamine^{®} D-600, Jeffamine^{®} D-2000, Jeffamine@ D-4000, Jeffamine@ T-403, Jeffamine@ T-3000, Jeffamine@ T-5000, Jeffamine^{®} THF-170, Jeffamine^{®} EDR-104, Jeffamine^{®} EDR-148 and Jeffamine^{®} EDR-176, as well as corresponding amines from BASF or Nitroil.
iv) Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine," HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine or N,N'-bis(3-amino-1-ethylpropyl)-2-methyl-1,5-pentanediamine.
v) Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-cyclohexyl-1,2-ethanediamine; 4-aminomethyl-piperidine; N-(2-aminoethyl)piperazine; N-methyl-1,3-propanediamine; N-butyl-1,3-propanediamine; N-(2-ethylhexyl)-1,3-propanediamine; N-cyclohexyl-1,3-propanediamine; 3-methylamino-1-pentylamine; 3-ethylamino-1-pentylamine; 3-cyclohexylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine^{®} 240 (from Mitsubishi Gas Chemical).
vi) Secondary diamines and, in particular, N,N'-dialkylation products of the previously mentioned polyamines with two primary amine groups, especially N,N'-dialkylation products of 1,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.
vii) Aromatic polyamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4-and 2,6-tolylenediamine; mixtures of 3,5-dimethylthio-2,4- and -2,6-tolylenediamine (available as Ethacure^{®} 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink^{®} from Air Products); 1,2-bis(2-aminophenylthio)ethane, 2-methylpropyl-(4-chloro-3,5-diaminobenzoate); and, tert.butyl-(4-chloro-3,5-diaminobenzoate).
viii) Polyamidoamines having at least two amine hydrogens reactive toward epoxide and of which indicative members include the reaction products of monohydric or polyhydric carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and, Beckopox^{®} EH 651, EH 654, EH 655, EH 661 and EH 663 (from Cytec).

Exemplary compounds among the aforementioned polyamines having at least two primary aliphatic amine groups are: isophorone diamine (IPDA); hexamethylene diamine (HMDA); 1,3-bis(aminomethyl)cyclohexane; 1,4-bis(aminomethyl)cyclohexane; bis(4-amino-cyclohexyl)methane; bis(4-amino-3-methylcyclohexyl)methane; NBDA; and, ether group-containing polyamines with a number average molecular weight (Mn) of up to 500 g/mol of which commercial examples include Jeffamine@ D-230 and THF-170 (available from Huntsman).

As noted above, the composition of the present invention may optionally comprise - as the curing agent - at least one compound which has at least two reactive mercapto-groups per molecule. Suitable mercapto-group containing compounds, which may be used alone or in combination, include but are not limited to the following:
- Mercaptan-terminated polyoxyalkylene ethers, obtainable by reacting polyoxyalkylenedi- and -triols either with epichlorohydrin or with an alkylene oxide, followed by sodium hydrogen sulfide.
- Mercaptan-terminated compounds in the form of polyoxyalkylene derivatives, known under the trade name of Capcure^{®} (from Cognis), in particular the types WR-8, LOF and 3-800 thereof.
- Polyesters of thiocarboxylic acids of which particular examples include: pentaerythritol tetramercapto-acetate (PETMP); trimethylolpropane trimercaptoacetate (TMPMP); glycol dimercaptoacetate; and, the esterification products of polyoxyalkylene diols and triols, ethoxylated trimethylolpropane and polyester diols with thiocarboxylic acids such as thioglycolic acid and 2- or 3-mercaptopropionic acid.
- 2,4,6-trimercapto-1,3,5-triazine, 2,2'-(ethylenedioxy)-diethanethiol (triethylene glycol dimercaptan) and / or ethanedithiol.
- Tris(2-(mercaptopropionyloxy)ethyl)isocyanate.

A preference is acknowledged for the use of polyesters of thiocarboxylic acids and, in particular, for the use of at least one of pentaerythritol tetramercapto-acetate (PETMP), tris-(3-mercaptopropionate) (TMP), trimethylolpropane trimercaptoacetate (TMPMP), tris(2-(mercaptopropionyloxy)ethyl)isocyanate and glycol dimercaptoacetate.

As noted above, a reactive curative may comprise at least one Mannich base. Such compounds may be characterized by containing at least one phenalkamine and, in particular, a phenalkamine obtained from the condensation of cardanol (CAS Number: 37330-39-5), an aldehyde and an amine. The reactant amine in the condensation reaction is desirably ethylenediamine or diethyltriamine.

Mannich bases and phenalkamines are known in the art and suitable examples include the commercially available phenalkamines Cardolite^{®} NC-541, NC-557, NC-558, NC-566, Lite 2001 and Lite 2002 (available from Cardolite), Aradur^{®} 3440, 3441, 3442 and 3460 (available from Huntsman) and Beckopox^{®} EH 614, EH 621, EH 624, EH 628 and EH 629 (available from Cytec).

Any common latent epoxy curing agents used in the art can be used in the present invention without special limitations. For example, suitable latent epoxy curing agents which may be used herein are described in: US Patent No. 4,546,155; US Patent No. 7,226,976; US Patent No. 4,833,226; JP2008214567; UK Patent No. GB 1,121,196; WO2014/165423; and, US Patent No. 5,077,376. Further, examples of commercially available latent epoxy curing agents include Ajicure PN-23, PN-40, PN-H, MY-24 and PN-50 commercially available from Ajinomoto Co., Inc.; EH-4337S, EH-3293S and EH-4357S commercially available from Asahi Denka Co. Ltd.; Novacure HX-3722 and HXA-3921 HP commercially available from Asahi Kasei Kogyo. K.K.; and, Sunmide LH-210, Ancamin 2014AS/FG and Ancamin 2337S commercially available from Air Products and Chemicals, Inc.

As is known in the art, dicyandiamide finds common utility as a latent epoxy curing agent and may indeed be used in the present compositions. When employed, it is preferred that said dicyandiamide is in finely divided form: a mean volume particle size (Dv50) of from 0.5 to 100 µm, for example from 1 to 50 µm or from 2 to 20 µm might be noted as desirable.

Further exemplary latent epoxy curing agents include but are not limited: ketimines obtainable by the reaction of aliphatic polyamines and ketones; polyethyleneimines, in particular polyethyleneimines having a weight average molecular weight (Mw) from 700 to 1,000,000 g/mol.; imidazole derivatives, such as 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethyl-imidazole; 2,4-diamino-8-2-methylimidazolyl-(1)-ethyl-5-triazine; addition products of triazine with isocyanuric acid; hydrazides such as succinohydrazide, adipohydrazide, isophtholohydrazide o-oxybenzohydrazide and salicyclohydrazide.

### Accelerator

The composition of the present invention should preferably comprise at least one accelerator. In this embodiment, the accelerator is a substance that promotes the reaction between the epoxide groups and the epoxide-reactive groups of the curing agent, for instance the reaction between the amine or thiol groups and the epoxide groups. A specific example relates to the use of an amine accelerator which functions by de-protonation of reactive thiol (-SH) groups present to thiolate (-S"), which thiolate reacts with epoxide group by nucleophilic ring opening polymerization.

The skilled artisan will recognize that the selection of an accelerator is not simply concerned with adding the fastest accelerator. Other factors determinative in the selection of accelerators include: cost; toxicity; solubility; processing effects, such as working time, premature gelation, exothermic degradation, expansion and off-gassing; final properties, such as glass transition temperature (T_{g}), modulus, strength, elongation at break and chemical resistance; regulatory concerns; and, ease of use.

Without intention to the limit the accelerators used in the present disclosure, mention may be made of the following suitable accelerators: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids and acid esters; ii) phenols, in particular bisphenols; ii) tertiary amines, such as N,N-dimethylbenzeneamine, N,N-dimethyl-p-toluidine, α-methylbenzyl dimethylamine, 2-piperazin-1-ylethanamine, 1,4-diazabicyclo[2.2.2]octane, triethanolamine, dimethylamino propylamine and salts of such tertiary amines; iii) imidazoles including N-methylimidazole, N-vinylimidazole and 1,2-dimethylimidazole iv) quaternary ammonium salts, such as benzyltrimethyl ammonium chloride; v) urea derivatives; vi) thiourea derivatives; vii) amidines, such as 1,8-diazabicyclo[5.4.0]undec-7-ene; viii) guanidines, such as 1,1,3,3-tetramethylguanidine; ix) phenol resins; and, x) phosphites, such as di- and triphenylphosphites.

In an embodiment, the accelerator constituent may comprise or consist of at least one compound in accordance with Formula (I) or Formula (II): 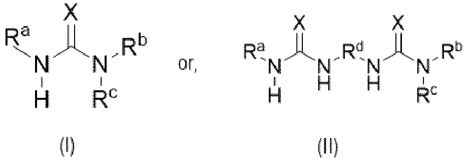 wherein:
X is O or S;
R^{a} and R^{b} are each independently selected from C₁-C₁₂ alkyl, C₁-C₁₂ hydroxyalkyl, C₁-C₁₂ aminoalkyl, C₃-C₁₈ cycloalkyl or C₆-C₁₈ aryl;
R^{c} is selected from H, C₁-C₁₂ alkyl, C₁-C₁₂ hydroxyalkyl, C₃-C₁₈ cycloalkyl or C₆-C₁₈ aryl; and,
R^{d} is C₆-C₁₈ arylene or C₇-C₁₈ alkylarylene,
subject to the proviso that where either R^{a} or R^{b} is C₁-C₁₂ aminoalkyl, each amino groups is a tertiary amino group of the formula -NR^{e}R^{f}, wherein R^{e} and R^{f} are each independently chosen from C₁-C₄ alkyl.

Having regard to Formula (I) and Formula (II), it is preferred that: X is O; R^{a} and R^{b} are each independently selected from C₁-C₈ alkyl, C₁-C₈ hydroxyalkyl, C₁-C₈ aminoalkyl, C₃-C₁₂ cycloalkyl or C₆ aryl; R^{c} is selected from H, C₁-C₈ alkyl, C₁-C₈ hydroxyalkyl, C₃-C₁₂ cycloalkyl or C₆ aryl; and, R^{d} is C₆-C₁₈ arylene or C₇-C₁₈ alkylarylene.

Exemplary urea accelerators include but are not limited to: 1,3-bis[3-(dimethylamino)propyl] urea; phenyl dimethyl urea; N,N'-dimethyl-N,N'-diphenyl-urea; N,N-dimethyl-N'-tolyl urea; N,N-dibutyl-N'-phenyl urea; N,N-dihydroxyethyl-N'-phenyl urea; N,N-dicyclohexyl-N'-isopropyl urea; 1,1'-(4-methyl-1,3-phenylene)bis(3,3-dimethylurea); 3,4-dichlorophenyl dimethyl urea (Diuron); 4-chlorophenyl dimethyl urea (Monuron); and, 4,4'-methylene bis(phenyl dimethyl urea).

In certain preferred embodiments, the accelerator is chosen from 1,3-bis[3-(dimethylamino)propyl] urea, bis(1,2,2,6,6-pentamethyl-4-piperidyl) sebacate, N-phenyl-3,s-diethyl-1,2-dihydropyrin, 2-[4-dimethylamino)-phenyl]-ethanol, N,N-dimethyl-p-toluidine, N-phenyl-3,s-diethyl-1,2-dihydropyridine, 2-[4-(dimethylamino)-phenyl]-ethanol, N,N-dimethyl-p-toluidine, 1-acetyl-2-phenylhydrazine, 2-(dimethylamino)ethyl methacrylate, N-[3-(dimethylamino)propyl]acrylamide, N-butyldiethanolamine, N,N-Bis-hydroxyethyl-p-toluidine, 2,2-(4-methylphenylimino)diethanol, and mixtures thereof. The use of 1,3-bis[3-(dimethylamino)propyl] urea may be mentioned in particular.

The accelerator should desirably be present in the composition in an amount of from 0.1 to 5 wt.%, based on the weight of the composition: the accelerator may preferably constitute from 0.1 to 2 wt.%, for example from 0.1 to 1 wt.% of said composition.

### Polyurethane Based Matrix Resin Systems

As noted above, the polymeric resin (A^{R}) of the curable, liquid state composition may be based on polyurethane. As such, in an embodiment, there may be provided a two-component (2K) composition comprising:
a first component comprising:
   at least one polyol chosen from fatty polyols, polyester polyols, polyether polyols, polyether-polyester polyols, polycarbonate polyols, polyacrylate polyols, polydiene polyols and mixtures thereof;
   optionally further active hydrogen compounds; and,
   thermally expandable thermoplastic microspheres as described herein above;
a second component comprising at least one polyisocyanate,
wherein said composition is characterized in that the molar ratio of NCO groups to active hydrogen atoms is from least 0.9:1 to 1.2:1, preferably from 0.95:1 to 1.2:1.

The curable two-component (2K) composition preferably comprises, based on the weight of the composition:
a first component comprising:
   from 10 to 40 wt.%, preferably from 10 to 30 wt.% of at least one polyol chosen from fatty polyols, polyester polyols, polyether polyols, polyether-polyester polyols, polycarbonate polyols, polyacrylate polyols, polydiene polyols and mixtures thereof; and,
   optionally further active hydrogen compounds;
   from 5 to 25 wt.%, preferably from 5 to 20 wt.% of thermally expandable thermoplastic microspheres as described herein above; and,
a second component comprising at least one polyisocyanate,
wherein said composition is characterized in that the molar ratio of NCO groups to active hydrogen atoms is from 1:1 to 1.2:1.

### Polyol(s)

The first component of the two-component (2K) composition of this embodiment comprises at least one polyol chosen from fatty polyols, polyester polyols, polyether polyols, polyether-polyester polyols, polycarbonate polyols, polyacrylate polyols, polydiene polyols and mixtures thereof. In an important embodiment, the first component comprises at least two polyols chosen from fatty polyols, polyester polyols, polyether polyols, polyether-polyester polyols, polycarbonate polyols, polyacrylate polyols, polydiene polyols and mixtures thereof. More particularly, it is preferred that the first component comprises at least two polyols chosen from: fatty polyols; polyether polyols; polyester polyols; polydiene polyols; and, mixtures thereof.

The or each polyol should preferably have a number average molecular weight (Mn) of from 200 to 50,000 g/mol, for instance from 200 to 8000 g/mol. Alternatively or additional to this molecular weight characterization, the hydroxyl number of the or each polyol(s) should preferably be from 10 to 500 mg KOH/g, for instance from 20 to 400 mg KOH/g or from 50 to 400 mg KOH/g. Further, where two or more polyols are included in the first component, the average hydroxyl functionality of the polyols should be at least 2, for instance from 2 to 6 or from 2 to 4.

In some embodiments, the first part includes at least one fatty polyol. Suitable fatty polyols include, for instance fatty acids, esters of fatty acids, amides of fatty acids and dimers, trimers, oligomers or polymers of fatty acids thereof, provided said compounds possess two or more hydroxyl groups. The hydroxyl functions of a suitable fatty polyol may reside on the fatty acid residue, on other parts of the molecule, or on both.

As exemplary fatty polyols there may be mentioned: castor oil; the products of hydroxylation of unsaturated or polyunsaturated natural oils; the products of hydrogenation of unsaturated or polyunsaturated polyhydroxyl natural oils; polyhydroxyl esters of alkyl hydroxy fatty acids; polymerized natural oils; and, alkylhydroxylated amides of fatty acids. A preference may be noted for the use, either alone or in combination of: castor oil; hydroxylated soybean oil; hydrogenated castor oil; polymerized castor oil; hydroxy ethyl ricinoleate; and, hydroxy ethyl ricinoleamide.

Polycarbonate diols may be obtained by reacting carbonic acid derivatives with diols. Exemplary carbonic acid derivatives are diaryl carbonates including but not limited to diphenyl carbonate, di(C₁-C₆)alkyl carbonates and phosgene. Exemplary diols include but are not limited to: ethylene glycol; 1,2-propanediol; 1,3-propanediol; 1,3-butanediol; 1,4-butanediol; 1,5-pentanediol; 1,6-hexanediol; cyclohexane dimethanol; diethylene glycol; dipropylene glycol; neopentylglycol; and, mixtures thereof.

Polyester diols may be obtained by reacting diols with either aliphatic, aromatic or cycloaliphatic dicarboxylic acids or, in some circumstances, the corresponding anhydrides thereof: the reaction may optionally take place in the presence of an esterification catalyst. Examples of suitable dicarboxylic acids include but are not limited to: adipic acid; glutaric acid; pimelic acid; suberic acid; nonanedicarboxylic acid; decanedicarboxylic acid; succinic acid; maleic acid; sebacic acid; azelaic acid; terephthalic acid; isophthalic acid; o-phthalic acid; tetrahydrophthalic acid; hexahydrophthalic acid; trimellitic acid; and, 1,4-cyclohexanedicarboxylic acid. Examples of suitable anhydrides include succinic, o-phthalic and trimellitic anhydride. It is noted that various commercially available dimeric fatty acids in saturated (hydrogenated) or unsaturated form may also be used as the dicarboxylic acid. And examples of suitable diols for the preparation of the polyester diols are: ethanediol; di-, tri-or tetraethylene glycol; 1,2-propanediol; di-, tri-, tetrapropylene glycol; 1,3-propanediol; 1,4-butanediol; 1,3-butanediol; 2,3-butanediol; 1,6-hexanediol; 1,5-pentanediol; 2,2-dimethyl-1,3-propanediol (neopentylglycol); 1,4-dihydroxycyclohexane; 1,4-dimethylcyclohexane; 1,8-octanediol; 1,10-decanediol; 1,12-decanediol; 2,2,4- and/or 2,4,4-trimethyl-1,3-pentanediol; and, mixtures thereof.

Other useful polyester diols are those obtainable from diol initiated polymerization of hydroxycarboxylic acids containing from 2 to 12 carbon atoms or a lactone thereof. The hydroxycarboxylic acids may be saturated or unsaturated, linear or branched, of which examples include: glycolic acid; lactic acid; 5-hydroxy valeric acid; 6-hydroxy caproic acid; ricinoleic acid; 12-hydroxy stearic acid; 12-hydroxydodecanoic acid; 5-hydroxydodecanoic acid; 5-hydroxydecanoic acid; and. 4-hydroxydecanoic acid. Examples of suitable lactones are β-propiolactone, δ-valerolactone, (C₁-C₆)alkyl-valerolactone, ε-caprolactone and (C₁-C₆)alkyl-ε-caprolactone.

Exemplary commercial polyether-polyester polyols having utility in the present invention include Solvermol^{®} 805 and Solvermol^{®} 750 available from BASF.

The above aside, it is preferred that at least one polyol from which the polyurethane is derived is a polyether polyol, in particular a polyether polyol having a polydispersity (PD) of less than 2, preferably less than 1.5, and more preferably less than 1.3. For completeness, a *"polyether"* is understood for purpose of the present invention as a polymer whose repeating unit contains ether functionalities C-O-C in the main chain. Polymers having lateral ether groups, such as cellulose ethers, starch ethers, and vinyl ether polymers, as well as polyacetals, are therefore not covered by this definition. Desirably, the polyether polyol is a polyoxyalkylene glycol and in particular a polyoxy(C₂-C₃)alkylene glycol. For completeness, the term polyoxy(C₂-C₃)alkylene refers to polyether radicals derived from ethyleneoxide, propyleneoxide or both ethyleneoxide and propyleneoxide.

Commercial examples of suitable polyether polyols include: Arcol series polyols, such as Arcol PPG 425, Arcol PPG 2025 available from Covestro; Dianol series polyols, such as Dianol 330 available from Arkema; and, Pluracol series polyols such as P-2010 available from BASF.

Polydiene polyols may have utility in the present disclosure. Specific mention may be made of polyisoprene diols and polybutadiene polyols, with the use of the latter preferred. Commercially available polybutadiene polyols include Krasol LBH 2000, available from Cray Valley.

Exemplary polymeric polyols include cardanol based polyols. Cardanol is a derivative of cashew nutshell liquid, which is extracted from the layer between the nut and shell of the cashew nut. This interlayer contains predominantly anacardic acid (*2-carboxy-3-pentadecadienylphenol*) and related acids having different double-bond contents, and also cardol (*m-pentadecadienylresorcinol*)*.* The liquid is extracted from the interlayer by heating, in the course of which the acids are decarboxylated. The products thus obtained comprise cardanol, cardol and related compounds having different numbers of double bonds. Cardanol is finally isolated from CNSL by distillation. The side chains, which are saturated or cis-unsaturated, may undergo further reaction, by polymerization, to form higher molecular mass compounds.

Preferably the cardanol-based polyol is chosen from: cardanol-based polyether polyols; cardanol-based polyester polyols; and, combinations thereof. The term cardanol-based polyether polyols include aminic polyether polyols such as Mannich polyols. Exemplary commercially available cardanol-based polyols include, but are not limited to: Polycard polyols available from Chemical Technical Services Inc., such as Polycard XFN-50, Polycar XFN-53 and Polycard 425M; GX-9201, GX 9203, NX-9001, NX-9001LV, NX-9004, NX-9007, NX-9008, NX-5285, GX-9005, GX-9006, GX-9007, GX-9101, GX-9102, GX-9103 and GX-9104, available from Cardolite Corporation; and, Argol Platinum available from BioBased Technologies.

### Optional Further Active Hydrogen Compounds

Where the first component of the composition includes further active hydrogen compounds, the added amount thereof is constrained by the aforementioned molar ratio of the active hydrogen atoms to the NCO groups in the two component (2K) composition.

When one or more further active hydrogen compound is present, it is preferred that such compound acts as a chain extender and is thereby preferably characterized by: a weight average molecular weight (Mw) of from 18 to 500 g/mol; and, having at least two active hydrogen containing groups. Water is not precluded from being such a compound. Equally, polyamines, polyhydric alcohols and sugars may find utility as chain extenders, optionally in combination with water.

As exemplary polyamines which may be used alone or in combination there may be mentioned: aminated polypropylene glycols such as Jeffamine D-400, available from Huntsman Chemical Company; hydrazine; piperazine; amino ethyl piperazine; 2-methyl piperazine; 1,5-diamino-3-methylpentane; isophorone diamine; ethylene diamine; diamino butane; hexane diamine; hexamethylene diamine; tetramethylene tetraamine; aminoethyl propyl trimethoxy silane; diethylene triamine; triethylene tetramine; triethylene pentamine; ethanolamine; and, lysine.

Exemplary polyhydric alcohols and sugars which may be used alone or in combination, include, but are not limited to: C₂-C₁₈ (cyclo)alkane diols of which mention may be made of ethanediol, di-, tri- or tetraethylene glycol, 1,2-propanediol, di-, tri-or tetrapropylene glycol, 1,3-propanediol, 1,4-butanediol, 1,3-butanediol, 2,3-butanediol, 1,6-hexanediol, 1,5-pentanediol, 2,2-dimethyl-1,3-propanediol (neopentylglycol), 1,4-dihydroxycyclohexane, 1,4-dimethylcyclohexane, 1,8-octanediol, 1,10-decanediol, 1,12-decanediol, 2,2,4- or 2,4,4-trimethyl-1,3-pentanediol; hydroquinone; catechol; resorcinol; phloroglucinol; pyrogallol; hydroxyhydroquinone; tris(hydroxymethyl)benzene; tris(hydroxymethyl)benzene with three methyl or ethyl substituents bonded to the remaining benzene carbon atoms; isosorbide; isomannide; isoidide; C₃-C₁₈ (cyclo)alkane triols of which mention may be made of glycerol, trimethylolpropane, 2-hydroxymethyl-1,3-propanediol, 1,1,1-tris(hydroxymethyl)propane, 1,1,1-tris(hydroxymethyl)ethane, cyclohexane-1,2,4-triol, 1,3,5-cyclohexanetriol, pentane-1,2,3-triol and hexane-1,3,5-triol; erythritol; 1,2,4,5-tetrahydroxybenzene; threitol; arabitol; xylitol; ribitol; mannitol; sorbitol; inositol; fructose; glucose; mannose; lactose; di(trimethylolpropane); trimethylolpropane ethoxylate; pentaerythritol allyl ether; and, pentaerythritol.

It is noted that at least one monol can preferably be employed in synthesizing the polyurethane as a further active hydrogen reactant. Exemplary monols include C₁-C₂₄ alkanols of which mention may be made of methanol, ethanol, propanol, isopropanol, butanol, 2-butanol, isobutanol, pentanol, hexanol, heptanol, octanols, nonanol, 1-decanol, undecanol, dodecanol, tridecanol, tetradecanol, pentadecanol, hexadecanol, heptadecanol, octadecanol, nonadecanol and eicosanol. Further, mono-functional hydrophilic polyoxyalkylene - such as polyoxyethylene or polyoxpropylene - can be incorporated into the polyurethane as a means of modifying the properties of the latex and improving its ease of emulsion formation. When included, said at least one monol should be present in an amount of from 0.1 to 5 wt.%, based on the weight of i) said at least one polyol.

### Polyisocyanate

The second component of the composition comprises at least one polyisocyanate. As used herein *"polyisocyanate"* means a compound comprising at least two -N=C=O functional groups, for example from 2 to 5 or from 2 to 4 -N=C=O functional groups. Suitable polyisocyanates include aliphatic, cycloaliphatic, aromatic and heterocyclic isocyanates, dimers and trimers thereof, and mixtures thereof.

Aliphatic and cycloaliphatic polyisocyanates can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1,6-hexamethylene diisocyanate (HDI), octamethylene diisocyanate, nonamethylene diisocyanate, decamethylene diisocyanate, 1,6,11-undecanetriisocyanate, 1,3,6-hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4'-diisocyanate (H₁₂MDI), 1-isocyanatomethyl-3-isocyanato-1,5,5-trimethyl-cyclohexane (isophorone diisocyanate, IPDI), cyclohexane 1,4-diisocyanate, hydrogenated xylylene diisocyanate (H₆XDI), 1-methyl-2,4-diisocyanato-cyclohexane, m- or p-tetramethylxylene diisocyanate (m-TMXDI, p-TMXDI) and dimer fatty acid diisocyanate.

The term *"aromatic polyisocyanate"* is used herein to describe organic isocyanates in which the isocyanate groups are directly attached to the ring(s) of a mono- or polynuclear aromatic hydrocarbon group. In turn, the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene and chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates include, but are not limited to: all isomers of toluene diisocyanate (TDI), either in the isomerically pure form or as a mixture of several isomers; naphthalene 1,5-diisocyanate; diphenylmethane 4,4'-diisocyanate (MDI); diphenylmethane 2,4'-diisocyanate and mixtures of diphenylmethane 4,4'-diisocyanate with the 2,4' isomer or mixtures thereof with oligomers of higher functionality (so-called crude MDI); xylylene diisocyanate (XDI); diphenyl-dimethylmethane 4,4'-diisocyanate; di- and tetraalkyl-diphenylmethane diisocyanates; dibenzyl 4,4'-diisocyanate; phenylene 1,3-diisocyanate; and, phenylene 1,4-diisocyanate.

The polyisocyanates, where required, may have been biuretized and / or isocyanurated by generally known methods, such as described in UK Patent No. 889,050.

The term *"polyisocyanate"* is here also intended to encompass pre-polymers formed by the partial reaction of the aforementioned aliphatic, cycloaliphatic, aromatic and heterocyclic isocyanates with polyols to give isocyanate functional oligomers, which oligomers may be used alone or in combination with free isocyanate(s). When employed, the NCO-functional pre-polymers should preferably be characterized by at least one of: a) an NCO content of from 5 to 30%, preferably from 10 to 25 wt.% based on the weight of the pre-polymer; b) an NCO functionality of from 2.2 to 3.0, preferably from 2.2 or 2.4 to 2.9; c) a viscosity at 20°C of from 300 to 35,000 mPa.s, preferably from 1,000 to 10,000 mPa.s; and, d) a number average molecular weight (Mn) of from 500 to 30,000, for example from 500 to 15,000 or from 500 to 10,000 g/mol. For completeness, these characterizations a) to d) are not intended to be mutually exclusive: indeed, the pre-polymer may meet one, two, three or four of these stated characterizations.

Commercial examples of suitable polyisocanates include, without intention to limit the present invention: Desmodur product series, such as Desmodur E 744, Desmodur VK10, Desmodur VK5 and Desmodur VK20 available from Covestro Deutschland; Hysol HF6005 isocyanate, available from Henkel Corporation; Isonate M product series, available from The Dow Chemical Company; Lupranat product series, available from BASF; and, Suprasec product series, available from Huntsman.

### Optional Catalysts

The polyurethane-based composition - and conventionally the first component thereof - may comprise standard catalysts for the reaction between polyisocyanates and active hydrogen compounds, as known in the art. Such catalysts include but are not limited to: stannous salts of carboxylic acids, such as stannous octoate, stannous oleate, stannous acetate and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; organosilicon titanium compounds; bismuth tris-2-ethylhexanoate, bismuth neodecanoate complexes and complexes of bismuth with hydroxypropyl ethylene diamine and hydroxylethyl ethylene diamine, available as Bicat^{®} catalysts from Everchem Specialty Chemicals; acid compounds such as phosphoric acid and p-toluenesulfonic acid; triphenylborane; triphenylphosphine; 1,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine. Depending on the nature of the isocyanate, the amount of catalyst employed is typically in the range from 0.005 to 5 wt.%, for example from 0.1 to 1 wt.% of the two component (2K) composition.

### Illustrative Embodiment of a Two-component (2K) Composition based on Polyurethane Resin

In an exemplary embodiment of a liquid, state curable composition from which the cured adhesive (10) may be obtained, there is provided a two-component (2K) composition comprising, based on the weight of the composition:
a first component comprising:
   from 10 to 40 wt.%, preferably from 10 to 30 wt.% of i) at least two polyols selected from the group consisting of fatty polyols, polyester polyols, polyether polyols, polydiene polyols and mixture thereof;
   optionally further active hydrogen compounds; and,
      from 5 to 25 wt.%, preferably from 5 to 20 wt.% of thermally expandable thermoplastic microspheres as described herein above; and,
a second component comprising iv) at least one polyisocyanate,
wherein said composition further comprises, based on the weight of the composition:
from 0.005 to 5 wt.%, preferably from 0.1 to 1 wt.% of catalyst; and,
from 0.5 to 10 wt.% of electrically non-conductive particulate filler,
further wherein said composition is characterized in that the molar ratio of NCO groups to active hydrogen atoms is from 1:1 to 1.2:1.

Whilst it is not strictly necessary, the aforementioned catalyst will normally be formulated in the first, polyol component of the composition.

The following examples are illustrative of the present invention and are not intended to limit the scope of the invention in any way.

### EXAMPLES

The following materials are employed in the Examples:

| | |
|---|---|
| LOCTITE TLB91500APS: | Polyurethane thermally conductive adhesive, available from Henkel Corporation. |
| Al3003: | Aluminium panel (*10 cm* × *2.5 cm* × *2.0 cm*), available from Rocholl. |
| PET: | Polyethylene terephthalate. |
| LOCTITE ECI 1014: | Solvent based conductive ink comprising silver particles and epoxy resin, available from Henkel Corporation. |
| Bonderite M-NT 1455W: | Surface cleaning wipes, available from Henkel Corporation. |

### Example 1

Bonded Structure Preparation: The resistive ink composition (LOCTITE ECI 1014) was printed on a PET foil via screen printing using a screen with a mesh count of 250 per inch, providing an Emulsion Over Mesh (EOM) thickness of from 7-12 µm. The resistive ink composition was dried at 120°C for 15 minutes to form a layer (11) having a final dry film thickness of 5 µm. A two-component (2K) composition based on polyurethane and comprising thermally expandable microspheres was applied onto the dried ink layer (11) by bar coating to a wet film thickness of 100 µm: the composition was cured in an oven at 40°C for 12 hours to form a thermally debondable adhesive layer (12). Rubber spacers (13) having a height of 1600 microns were disposed at discrete loci on the thermally debondable adhesive layer (12). Polyurethane thermally conductive adhesive composition (LOCTITE TLB91500APS) was applied on top of the thermally debondable adhesive layer (12) to a wet film thickness of 1600 micron: an Al3003 specimen, which had been pre-treated with Bonderite M-NT 1455W wipes, was glued to the top of the thermally conductive adhesive layer (14) and the obtained setup was cured in the oven at 60°C for 72 hours. The bonded structure was in accordance with Figure 2 appended hereto.

Debonding: A Keithley SourceMeter with a voltage range of from 1 to 20V was electrically connected to the dried ink layer (11) of the bonded structure. The temperatures of the dried ink film (11) and of the adhesive layer (12) were monitored via thermal imaging camera (FLIR C5). When the temperature of the dried ink film (11) reached 130°C, cohesive failure of the adhesive layer occurred providing a debonding effect. Some disruption of current flow through the dried ink layer (12) was observed: it is considered that foaming of the adhesive layer caused circuit breaking.

### Example 2

Bonded Structure Preparation: The resistive ink composition (LOCTITE ECI 1014) was printed on a PET foil via screen printing using a screen with a mesh count of 250 per inch, providing an Emulsion Over Mesh (EOM) thickness of from 7-12 µm. The resistive ink composition was dried at 120°C for 15 minutes to form a layer (11) having a final dry film thickness of 5 µm. A two-component (2K) composition based on epoxide and comprising thermally expandable microspheres was applied onto the dried ink layer (11) by bar coating to a wet film thickness of 100 µm: the composition was cured in an oven at 60°C for 2 hours to form a thermally debondable adhesive layer (12). Rubber spacers (13) having a height of 1600 microns were disposed at discrete loci on the thermally debondable adhesive layer (12). Polyurethane thermally conductive adhesive composition (LOCTITE TLB91500APS) was applied on top of the thermally debondable adhesive layer (12) to a wet film thickness of 1600 micron: an Al3003 specimen, which had been treated with Bonderite M-NT 1455W, was glued to the top of the thermally conductive adhesive layer (14) and the obtained setup was cured in the oven at 60°C for 72 hours. The bonded structure was in accordance with Figure 2 appended hereto.

Debonding: A Keithley SourceMeter with a voltage range of from 1 to 20V was electrically connected to the dried ink layer (11) of the bonded structure. The temperatures of the dried ink film (11) and of the adhesive layer (12) were monitored via thermal imaging camera (FLIR C5). When the temperature of the dried ink film (11) reached 130°C, cohesive failure of the adhesive layer occurred providing a debonding effect. Some disruption of current flow through the dried ink layer (12) was observed: it is considered that foaming of the adhesive layer caused circuit breaking.

Although some preferred embodiments have been described, many modifications and variations may be made thereto in light of the above teachings. It is therefore to be understood that the invention may be practiced otherwise than as specifically described without departing from the scope of the appended claims.

## Claims

1. A bonded structure comprising:
a first substrate (S¹);
a second substrate (S²); and,
a thermally conductive adhesive layer which is interposed between said first and second substrates and which is disposed on said second substrate (S²);
wherein, interposed between said first substrate (S¹) and said thermally conductive adhesive layer, there is further provided:
a dried ink layer, said dried ink layer comprising a matrix of polymeric resin (I^{R}) and electrically conductive particles; and,
a thermally debondable adhesive layer disposed on and in direct contact with said dried ink layer, said thermally debondable adhesive layer comprising a polymeric resin (A^{R}) and thermally expandable thermoplastic microspheres.

2. The bonded structure according to claim 1, wherein said thermally conductive adhesive layer is disposed on and in direct contact with said second substrate (S²).

3. The bonded structure according to claim 1 or claim 2, wherein said dried ink layer is interposed between said first substrate (S¹) and said thermally debondable adhesive layer with which it is in direct contact.

4. The bonded structure according to claim 3, wherein said thermally debondable adhesive layer is disposed on and in direct contact with said thermally conductive adhesive layer.

5. The bonded structure according to claim 4, wherein at least one spacer is disposed within said thermally conductive adhesive layer, said at least one spacer contacting said thermally debondable adhesive layer.

6. The bonded structure according to claim 1 or claim 2, wherein said dried ink layer is interposed between said thermally conductive adhesive layer and said thermally debondable adhesive layer with which it is in direct contact.

7. The bonded structure according to any one of claims 1 to 6, wherein:
i) said thermally conductive adhesive layer has a thickness of from 250 to 2500 µm, preferably from 500 to 2000 µm and more preferably from 1000 to 2000 µm;
ii) said thermally debondable adhesive layer has a thickness of from from 50 to 300 µm, preferably from 100 to 300 µm and more preferably from 150 to 250 µm;
iii) said dried ink layer has an average thickness of from 1 to 30 µm, preferably from 1 to 25 µm and more preferably from 5 to 20 µm; or,
iv) any combination of conditions i) to iii) is met.

8. The bonded structure according to any one of claims 1 to 7, wherein said dried ink layer has a sheet resistance of from 5 to 100 ohm/sq. mil as determined in accordance with ASTM D257-14 (2021).

9. The bonded structure according to any one of claims 1 to 8, wherein said dried ink layer comprises, based on the total weight of the layer: a matrix of polymeric resin (I^{R}); and, from 0.5 to 75 wt.% of electrically conductive particles disposed in said matrix, wherein said electrically conductive particles are **characterized by** a bulk resistivity of less than 50 microohm-centimeters (µΩ-cm).

10. The bonded structure according to any one of claims 1 to 9, wherein said dried ink layer comprises, based on the volume of the layer: a matrix of polymeric resin (I^{R}); and, from 5 to 90 vol.% of electrically conductive particles disposed in said matrix, wherein said electrically conductive particles are **characterized by** a bulk resistivity of less than 50 microohm-centimeters (µΩ-cm).

11. The bonded structure according to any one of claims 1 to 10, wherein the matrix resin (I^{R}) of the dried ink layer is chosen from: nitrocellulose; epoxy resins; phenolic resins; polyurethane; polyacrylates; and, mixtures thereof.

12. The bonded structure according to any one of claims 1 to 11, wherein said thermally debondable adhesive layer comprises, based on weight of said layer, from 5 to 20 wt.%, preferably from 10 to 20 wt.% and more preferably from 10 to 15 wt.% of said thermally-expandable thermoplastic microspheres.

13. The bonded structure according to any one of claims 1 to 12, wherein said thermally expandable thermoplastic microspheres have a core-shell structure, wherein the shell is formed from cross-linked polymer and the core is composed of a blowing agent.

14. The bonded structure according to any one of claims 1 to 13, wherein said thermally expandable thermoplastic microspheres expand when exposed to a temperature of from 60 to 200°C, preferably from 80 to 160 °C, more preferably from 80 to 120°C.

15. The bonded structure according to any one of claims 1 to 14, wherein said thermally debondable adhesive layer is obtainable by the curing of a two-component (2K) composition comprising:
a first component comprising:
at least one epoxide compound; and,
thermally-expandable thermoplastic microspheres; and,
a second component comprising:
a curing agent comprising at least one compound possessing at least two epoxide reactive groups per molecule; and,
optionally an accelerator,
wherein the composition is **characterized by** a molar ratio of epoxide-reactive groups to epoxide groups from 0.6:1 to 1.2: 1, preferably from 0.95: 1 to 1.1: 1.

16. The bonded structure according to any one of claims 1 to 14, wherein said thermally debondable adhesive layer is obtainable by the curing of a two-component (2K) composition comprising:
a first component comprising:
at least one polyol chosen from fatty polyols, polyester polyols, polyether polyols, polyether-polyester polyols, polycarbonate polyols, polyacrylate polyols, polydiene polyols and mixtures thereof;
optionally further active hydrogen compounds; and,
said thermally expandable thermoplastic microspheres;
a second component comprising at least one polyisocyanate,
wherein said composition is **characterized in that** the molar ratio of NCO groups to active hydrogen atoms is from least 0.9:1 to 1.2:1, preferably from 0.95:1 to 1.1:1.

17. A method of debonding the bonded structure as defined in any one of claims 1 to 16, said method comprising the steps of:
i) resistively heating the thermally debondable adhesive layer by passing an electric current through the dried ink layer; and,
ii) debonding said adhesive layer and said dried ink layer.

18. The method according to claim 17, wherein:
i) electric current is passed through the dried ink layer for a duration of from 15 to 3600 seconds, preferably from 15 to 1800 seconds; and / or,
ii) said thermally debondable adhesive layer is resistively heated to a temperature of from 60 to 200°C, preferably from 80 to 160°C and more preferably from 80 to 120°C.
